# EUROPEAN PATENT APPLICATION

(11) **EP 3 912 856 A1**
(43) Date of publication of application: **24.11.2021**
(21) Application number: 20180398.8
(22) Date of filing: 16.06.2020
(51) Int. Cl.: B60P 1/44, B66F 7/06, B66F 9/06, A61G 3/06

(54) **CARGO LOWERING SLIDE ASSEMBLY**

(30) Priority: 22.05.2020 US 202016881951
(71) Applicant: OnScene Solutions, LLC, Fort Collins, CO 80521 (US)
(72) Inventor: Weinmeister, Ronald L, Fort Collins, CO Colorado 80521 (US); Krug, Eric Martin, Fort Collins, CO Colorado 80521 (US); Bradney, Timothy James, Fort Collins, CO Colorado 80521 (US); Clark, Robert M., Fort Collins, CO Colorado 80521 (US)
(74) Representative: Murgitroyd & Company

(57) **Abstract**

The present invention is directed to properly maneuver heavy cargo to an ergonomically correct lifting height, including for equipment stored on firefighting and rescue vehicles. Mechanically and electromechanically actuated means (1800) for raising, lowering, and storing heavy equipment in, on, and around vehicles and other structures are provided.

## Description

### FIELD OF THE INVENTION

The present invention is directed to the problem of how to properly maneuver heavy cargo to an ergonomically correct lifting height is a problem for countless industries, including for equipment stored on firefighting and rescue vehicles. Mechanical and electrically actuated horizontal drawer slides enable loads to be moved outside of an enclosure or storage structure for easier access. However, the height of the horizontal drawer slide is dictated by the structure of the vehicle and is often too high or too low for safe lifting of heavy cargo from the horizontal drawer slide. The user must therefore lift the heavy equipment from an awkward and potentially dangerous height and risks bodily injury.

### SUMMARY OF THE INVENTION

The present invention is a cargo lowering slide assembly that achieves horizontal and extended mobility of a cargo platform from a storage compartment as well as vertical mobility of the cargo platform once outside of the storage compartment. The referenced cargo lowering slide assembly generally refers to the completed assembly of all components allowing these types of movements. The reference to a "slide assembly" is to a component of the cargo lowering slide assembly that facilitates the horizontal travel of the cargo platform.

The cargo lowering slide assembly with the features listed below, will greatly enhance cargo handling capabilities for numerous industries and allow for more ergonomically correct and safe lifting advantages over what currently exists.

In certain embodiments of the present invention, the cargo lowering slide assembly includes partial or complete electric, electric/hydraulic, or air-actuated horizontal and vertical actuation of the drawer slide and lifting arms; 30.0+ inches of vertical lifting cargo platform travel; 500 pound and above weight capacity; construction materials including aluminum and stainless steel construction; and customizable sizing to accommodate various enclosure and cargo platform sizes.

Certain embodiments of the present invention comprise one or more components that are automatically controlled by computer hardware and/or computer software by way of a controller element. In an exemplary embodiment, the positioning and/or orientation of one or more components are automatically positioned to a set orientation based on a profile inputted by a manufacturer or user. Alternatively, or additionally, the controller may access a database of user profiles, and/or set generic user profiles, and adjust the cargo lowering slide assembly to satisfy those profiles. In certain embodiments, the user inputs desired cargo platform extension and lowering position or settings by way of a display, screen or graphical user interface.

The present disclosure can provide a number of advantages depending on the particular aspect, embodiment, and/or configuration.

The phrases "at least one," "one or more," and "and/or" are open-ended expressions that are both conjunctive and disjunctive in operation. For example, each of the expressions "at least one of A, B and C," "at least one of A, B, or C," "one or more of A, B, and C," "one or more of A, B, or C" and "A, B, and/or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising," "including," and "having" can be used interchangeably.

The term "automatic" and variations thereof, as used herein, refers to any process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

The term "computer-readable medium" as used herein refers to any storage and/or transmission medium that participate in providing instructions to a processor for execution. Such a computer-readable medium is commonly tangible, non-transitory, and non-transient and can take many forms, including but not limited to, non-volatile media, volatile media, and transmission media and includes without limitation random access memory ("RAM"), read only memory ("ROM"), and the like. Nonvolatile media includes, for example, NVRAM, or magnetic or optical disks. Volatile media includes dynamic memory, such as main memory. Common forms of computer-readable media include, for example, a floppy disk (including without limitation a Bernoulli cartridge, ZIP drive, and JAZ drive), a flexible disk, hard disk, magnetic tape or cassettes, or any other magnetic medium, magneto-optical medium, a digital video disk (such as CD-ROM), any other optical medium, punch cards, paper tape, any other physical medium with patterns of holes, a RAM, a PROM, and EPROM, a FLASH-EPROM, a solid state medium like a memory card, any other memory chip or cartridge, a carrier wave as described hereinafter, or any other medium from which a computer can read. A digital file attachment to e-mail or other self-contained information archive or set of archives is considered a distribution medium equivalent to a tangible storage medium. When the computer-readable media is configured as a database, it is to be understood that the database may be any type of database, such as relational, hierarchical, object-oriented, and/or the like. Accordingly, the disclosure is considered to include a tangible storage medium or distribution medium and prior art-recognized equivalents and successor media, in which the software implementations of the present disclosure are stored. Computer-readable storage medium commonly excludes transient storage media, particularly electrical, magnetic, electromagnetic, optical, magneto-optical signals.

The terms "determine," "calculate," and "compute," and variations thereof, as used herein, are used interchangeably and include any type of methodology, process, mathematical operation, or technique.

The term "means" as used herein shall be given its broadest possible interpretation in accordance with 35 U.S.C., Section 112, Paragraph 6. Accordingly, a claim incorporating the term "means" shall cover all structures, materials, or acts set forth herein, and all the equivalents thereof. Further, the structures, materials or acts and the equivalents thereof shall include all those described in the summary, brief description of the drawings, detailed description, abstract, and claims themselves.

The term "module" as used herein refers to any known or later developed hardware, software, firmware, artificial intelligence, fuzzy logic, or combination of hardware and software that can perform the functionality associated with that element.

The term "screen," "touch screen," or "touchscreen" refers to a physical structure that includes one or more hardware components that provide the device with the ability to render a user interface and/or receive user input. A screen can encompass any combination of gesture capture region, a touch sensitive display, and/or a configurable area. The device can have one or more physical screens 3 embedded in the hardware. However, a screen may also include an external peripheral device that may be attached and detached from the device. In embodiments, multiple external devices may be attached to the device. Thus, in embodiments, the screen can enable the user to interact with the device by touching areas on the screen and provides information to a user through a display. The touch screen may sense user contact in many ways, such as by a change in an electrical parameter (e.g., resistance or capacitance), acoustic wave variations, infrared radiation proximity detection, light variation detection, and the like. In a resistive touch screen, for example, normally separated conductive and resistive metallic layers in the screen pass an electrical current. When a user touches the screen, the two layers make contact in the contacted location, whereby a change in electrical field is noted and the coordinates of the contacted location calculated. In a capacitive touch screen, a capacitive layer stores electrical charge, which is discharged to the user upon contact with the touch screen, causing a decrease in the charge of the capacitive layer. The decrease is measured, and the contacted location coordinates determined. In a surface acoustic wave touch screen, an acoustic wave is transmitted through the screen, and the acoustic wave is disturbed by user contact. A receiving transducer detects the user contact instance and determines the contacted location coordinates.

The term "display" refers to a portion of one or more screens used to display the output of a computer to a user. A display may be a single-screen display or a multi-screen display, referred to as a composite display. A composite display can encompass the touch sensitive display of one or more screens. A single physical screen can include multiple displays that are managed as separate logical displays. Thus, different content can be displayed on the separate displays although part of the same physical screen.

Examples of the processors as described herein may include, but are not limited to, at least one of Qualcomm® Snapdragon® 800 and 801, Qualcomm® Snapdragon® 610 and 615 with 4G LTE Integration and 64-bit computing, Apple® A7 processor with 64-bit architecture, Apple® M7 motion coprocessors, Samsung® Exynos® series, the Intel® Core™ family of processors, the Intel® Xeon® family of processors, the Intel® Atom™ family of processors, the Intel Itanium® family of processors, Intel® Core® i5-4670K and i7-4770K 22nm Haswell, Intel® Core® i5-3570K 22nm Ivy Bridge, the AMD® FX™ family of processors, AMD® FX-4300, FX-6300, and FX-8350 32nm Vishera, AMD® Kaveri processors, Texas Instruments® Jacinto C6000™ automotive infotainment processors, Texas Instruments® OMAP™ automotive-grade mobile processors, ARM® Cortex™-M processors, ARM® Cortex-A and ARM926EJ-S™ processors, other industry-equivalent processors, and may perform computational functions using any known or future developed standard, instruction set, libraries, and/or architecture.

Certain embodiments of the present invention comprise wireless communication hardware such as Wi-Fi, Bluetooth®, Zigbee®, or other wireless communication protocol enabling hardware known to those skilled in the art.

Certain embodiments of the present invention comprise onboard monitoring for maintenance, technical support and other purposes wherein notifications are output to users, technical support staff, and/or other stakeholders associated with the cargo lowering slide assembly as necessary.

Furthermore, while the exemplary aspects, embodiments, and/or configurations illustrated herein show the various components of the system collocated, certain components of the system may be located remotely, at distant portions of a distributed network, such as a LAN and/or the Internet, or within a dedicated system. Thus, it should be appreciated, that the components of the system may be combined in to one or more devices, or collocated on a particular node of a distributed network, such as an analog and/or digital telecommunications network, a packet-switch network, or a circuit-switched network. It will be appreciated from the preceding description, and for reasons of computational efficiency, that the components of the system may be arranged at any location within a distributed network of components without affecting the operation of the system. For example, the various components may be located in a switch such as a PBX and media server, gateway, in one or more communications devices, at one or more users' premises, or some combination thereof. Similarly, one or more functional portions of the system could be distributed between a telecommunications device(s) and an associated computing device.

Furthermore, it should be appreciated that the various links connecting the elements may be wired or wireless links, or any combination thereof, or any other known or later developed element(s) that is capable of supplying and/or communicating data to and from the connected elements. These wired or wireless links may also be secure links and may be capable of communicating encrypted information. Transmission media used as links, for example, may be any suitable carrier for electrical signals, including coaxial cables, copper wire and fiber optics, and may take the form of acoustic or light waves, such as those generated during radio-wave and infra-red data communications.

Also, while the orders of operation have been discussed and illustrated in relation to a particular sequence of events, it should be appreciated that changes, additions, and omissions to this sequence may occur without materially affecting the operation of the disclosed embodiments, configuration, and aspects.

A number of variations and modifications of the disclosure may be used. It would be possible to provide for some features of the disclosure without providing others.

In other embodiments, the systems and methods of this disclosure may be implemented in conjunction with a special purpose computer, a programmed microprocessor or microcontroller and peripheral integrated circuit element(s), an ASIC or other integrated circuit, a digital signal processor, a hard-wired electronic or logic circuit such as discrete element circuit, a programmable logic device or gate array such as PLD, PLA, FPGA, PAL, special purpose computer, any comparable means, or the like. In general, any device(s) or means capable of implementing the methodology illustrated herein may be used to implement the various aspects of this disclosure. Exemplary hardware that may be used for the disclosed embodiments, configurations and aspects includes computers, handheld devices, telephones (e.g., cellular, Internet enabled, digital, analog, hybrids, and others), and other hardware known in the art. Some of these devices include processors (e.g., a single or multiple microprocessors), memory, nonvolatile storage, input devices, and output devices. Furthermore, alternative software implementations including, but not limited to, distributed processing or component/object distributed processing, parallel processing, or virtual machine processing may also be constructed to implement the methods described herein.

In other embodiments, the disclosed methods may be readily implemented in conjunction with software using object or object-oriented software development environments that provide portable source code that may be used on a variety of computer or workstation platforms. Alternatively, the disclosed system may be implemented partially or fully in hardware using standard logic circuits or VLSI design. Whether software or hardware is used to implement the systems in accordance with this disclosure is dependent on the speed and/or efficiency requirements of the system, the particular function, and the particular software or hardware systems or microprocessor or microcomputer systems being utilized.

In other embodiments, the disclosed methods may be partially implemented in software that may be stored on a storage medium, executed on programmed general-purpose computer with the cooperation of a controller and memory, a special purpose computer, a microprocessor, or the like. In these instances, the systems and methods of this disclosure may be implemented as program embedded on personal computer such as an applet, JAVA® or CGI script, as a resource residing on a server or computer workstation, as a routine embedded in a dedicated measurement system, system component, or the like. The system may also be implemented by physically incorporating the system and/or method into a software and/or hardware system.

The preceding is a simplified summary of the disclosure to provide an understanding of some aspects of the disclosure. This Summary is neither an extensive nor exhaustive overview of the disclosure and its various aspects, embodiments, and/or configurations. It is intended neither to identify key or critical elements of the disclosure nor to delineate the scope of the disclosure but to present selected concepts of the disclosure in a simplified form as an introduction to the more detailed description presented below. As will be appreciated, other aspects, embodiments, and/or configurations of the disclosure are possible utilizing, alone or in combination, one or more of the features set forth above or described in detail below. Also, while the disclosure is presented in terms of exemplary embodiments, it should be appreciated that individual aspects of the disclosure can be separately claimed.

The Description of the invention, the drawing figures, and any exemplary claim set forth herein, taken in conjunction with this Summary of the invention, define the invention.

### BRIEF DESCRIPTION OF THE DRAWINGS

**Figure 1A** - depicts a first side of the slide assembly in an extended position of certain embodiments.
**Figure 1B** - depicts a second side of the slide assembly in an extended position of certain embodiments.
**Figure 2A** - depicts a cargo lowering slide assembly of certain embodiments showing a first side of a slide assembly in an extended position with interconnected scissor arms and cargo platform in a retracted or lifted position.
**Figure 2B** - depicts a cargo lowering slide assembly of certain embodiments showing a second side of a slide assembly in an extended position with interconnected scissor arms and cargo platform in a retracted or lifted position.
**Figure 3A** - depicts a first and second side of the drawer slide with interconnected scissor arms and cargo platform in an extended or lowered position in certain embodiments of a cargo lowering slide assembly.
**Figure 3B** - depicts a second side of the drawer slide with interconnected scissor arms and cargo platform in an extended or lowered position in certain embodiments of a cargo lowering slide assembly.
**Figure 4A** - depicts a side of the slide assembly with interconnected scissor arms and cargo platform in retracted, intermediate, and extended positions of a cargo lowering slide assembly showing in certain embodiments.
**Figures 4B** - depicts a side of the slide assembly with interconnected scissor arms and cargo platform in retracted, intermediate, and extended positions of a cargo lowering slide assembly showing in certain embodiments.
**Figure 4C** - depicts a side of the slide assembly with interconnected scissor arms and cargo platform in retracted, intermediate, and extended positions of a cargo lowering slide assembly showing in certain embodiments.
**Figure 5** - depicts certain embodiments of cargo lowering slide assembly in a horizontally retracted position with the cargo platform within a storage compartment or enclosure.
**Figure 6** - depicts certain embodiments of the cargo lowering slide assembly with the cargo platform in a horizontally extended position outside of the storage compartment or enclosure.
**Figure 7** - depicts certain embodiments of a cargo lowering slide assembly with the cargo platform in a horizontally extended and vertically lowered position outside of the storage compartment or enclosure.
**Figures 8A** - depicts certain embodiments of a cargo lowering slide assembly showing a first side of the slide assembly with interconnected scissor arms and cargo platform in a retracted.
**Figures 8B** - depicts certain embodiments of a cargo lowering slide assembly showing a first side of the slide assembly with interconnected scissor arms and cargo platform in an intermediate position.
**Figures 8C** - depicts certain embodiments of a cargo lowering slide assembly showing a second side of the slide assembly with interconnected scissor arms and cargo platform in a retracted position.
**Figures 8D** - depicts certain embodiments of a cargo lowering slide assembly showing a side of the slide assembly with interconnected scissor arms and cargo platform in an intermediate position.
**Figures 9A** - depicts certain embodiments of a cargo lowering slide assembly showing a side of the slide assembly with interconnected scissor arms and cargo platform in a horizontally retracted or fully stowed position.
**Figures 9B** - depicts certain embodiments of a cargo lowering slide assembly in an extended configuration showing a side of the slide assembly in an extended position with interconnected scissor arms and cargo platform in a retracted or raised position.
**Figures 9C** - depicts certain embodiments of a cargo lowering slide assembly in an intermediate configuration showing a side of the slide assembly in an extended position with interconnected scissor arms and cargo platform in an intermediate position.
**Figure 9D** - depicts certain embodiments of a cargo lowering slide assembly in a fully deployed configuration showing a side of the slide assembly in an extended position with interconnected scissor arms and cargo platform in a lowered configuration.
**Figure 10A** - depicts certain embodiments of a cargo lowering slide assembly in a horizontally retracted position with the cargo platform within a storage compartment or enclosure.
**Figure 10B** - depicts certain embodiments of a cargo lowering slide assembly in a horizontally retracted position with the cargo platform within a storage compartment or enclosure, with a door in a closed and intermediate configuration.
**Figure 10C** - depicts certain embodiments of a cargo lowering slide assembly in a horizontally retracted position with the cargo platform within a storage compartment or enclosure, with a door in an open configuration.
**Figure 10D** - depicts certain embodiments of a cargo lowering slide assembly in a horizontally retracted position with the cargo platform within a storage compartment or enclosure, with a door in an intermediate configuration.
**Figure 11** - depicts certain embodiments of a cargo lowering slide assembly with the cargo platform in a horizontally extended position outside of a storage compartment or enclosure.
**Figure 12** - depicts certain embodiments of a cargo lowering slide assembly with a cargo platform in a horizontally extended and vertically lowered position outside of a storage compartment or enclosure.
**Figure 13** - depicts the scissor arm configuration in certain embodiments showing a first side portion of the actuator devices.
**Figure 14** - depicts the scissor arm configuration in certain embodiments showing a second side portion of the actuator devices.
**Figure 15** - depicts certain embodiments of the cargo lowering slide assembly.
**Figure 16A** - an isometric view of certain embodiments of a cargo lowering slide assembly in a fully stowed configuration.
**Figure 16B** - an isometric view of certain embodiments of a cargo lowering slide assembly in an extended configuration.
**Figure 16C** - an isometric view of certain embodiments of a cargo lowering slide assembly in a fully deployed configuration.
**Figure 16D** - an isometric view of certain embodiments of a cargo lowering slide assembly in a fully deployed configuration.
**Figure 17** - a cross-sectional front view of certain embodiments comprising a first slide assembly.
**Figure 18A** - an isometric view of certain embodiments comprising a first slide assembly in a fully stowed configuration.
**Figure 18B** - an isometric view of certain embodiments comprising a first slide assembly in an extended configuration and raised configuration.
**Figure 18C** - an isometric view of certain embodiments comprising a first slide assembly in an extended configuration and raised configuration.
**Figure 18D** - a first side view of certain embodiments comprising a first slide assembly in a fully stowed configuration.
**Figure 18E** - a first side view of certain embodiments comprising a first slide assembly in an extended configuration and raised configuration.
**Figure 18F** - a second side view of certain embodiments comprising a first slide assembly in an extended configuration and raised configuration.
**Figure 18G** - a second side view of certain embodiments comprising a first slide assembly in an extended configuration and lowered configuration.
**Figure 18H** - depicts certain embodiments of the slide assembly.
**Figure 18I** - depicts certain embodiments of the slide assembly.
**Figure 19** - a side view of a cable lift assembly of certain embodiments
**Figure 20** - a side view of a cable lift assembly of certain embodiments
**Figure 21A** - depicts certain embodiments of the cargo platform.
**Figure 21B** - depicts certain embodiments of the cargo platform.

### DETAILED DESCRIPTION OF VARIOUS EMBODIMENTS

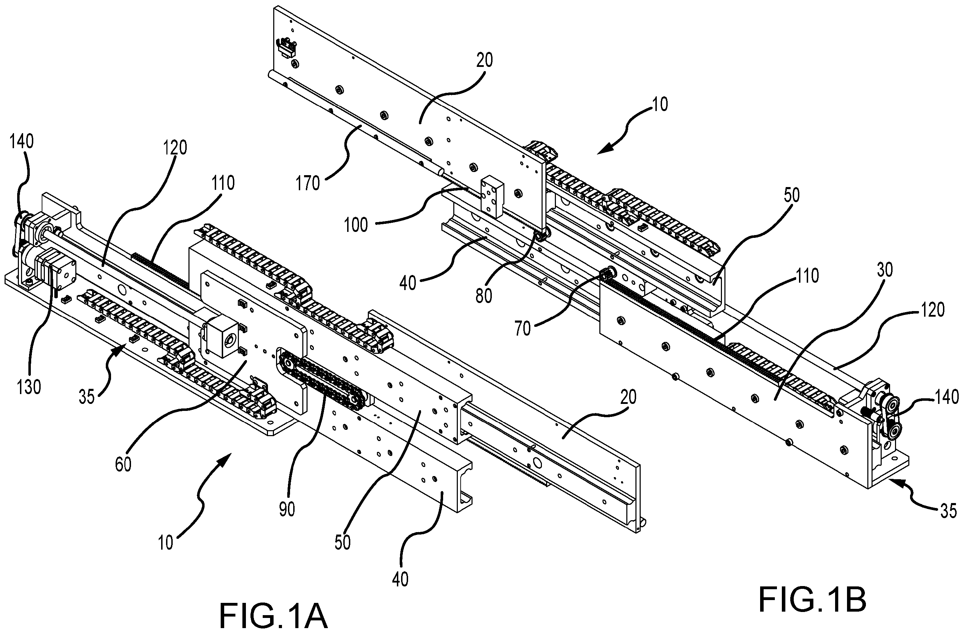

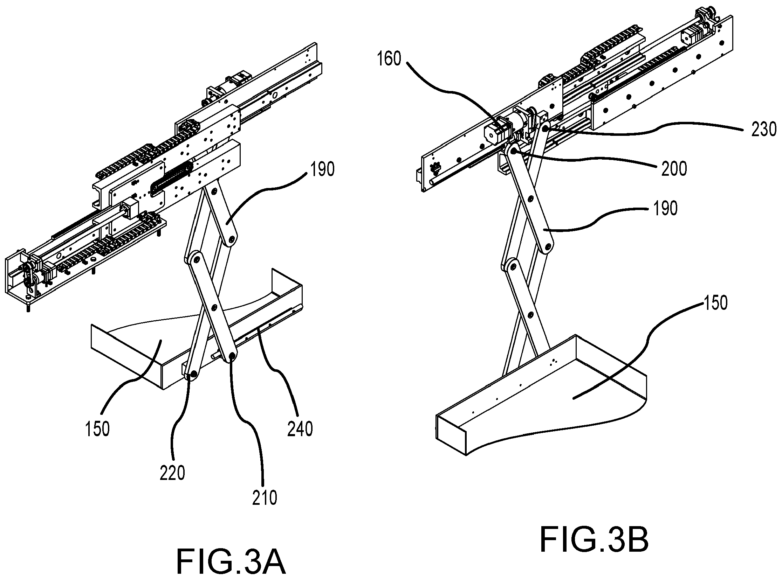

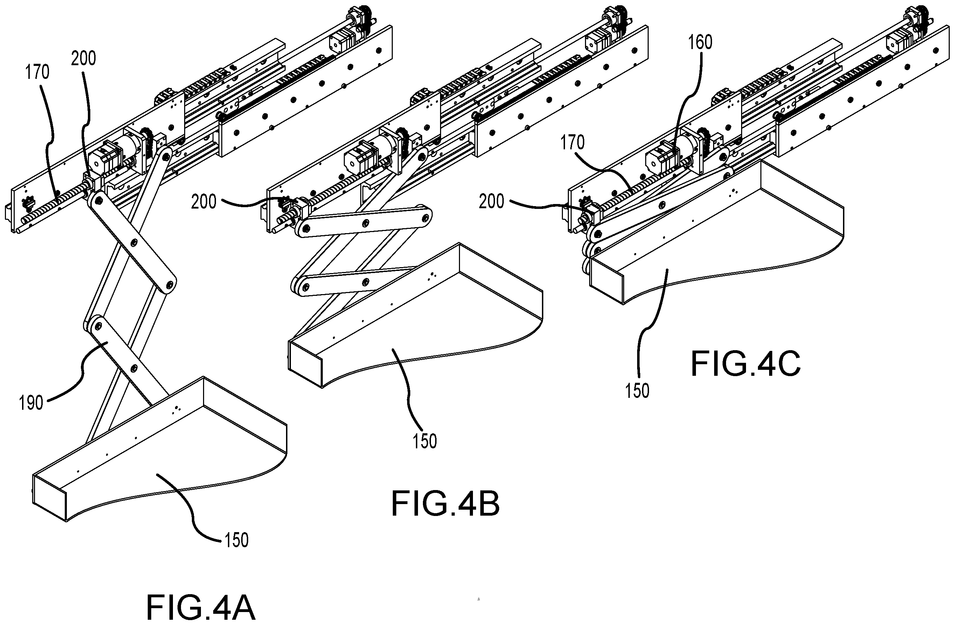

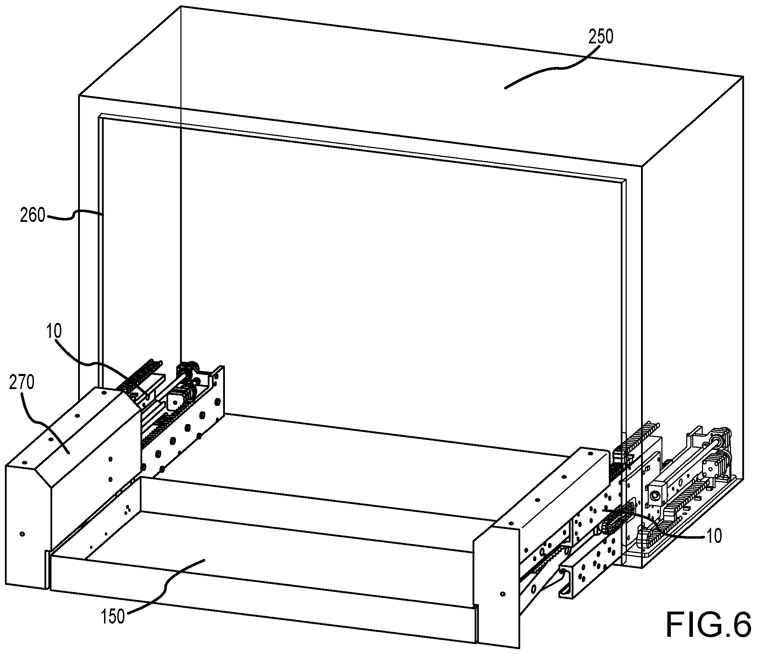

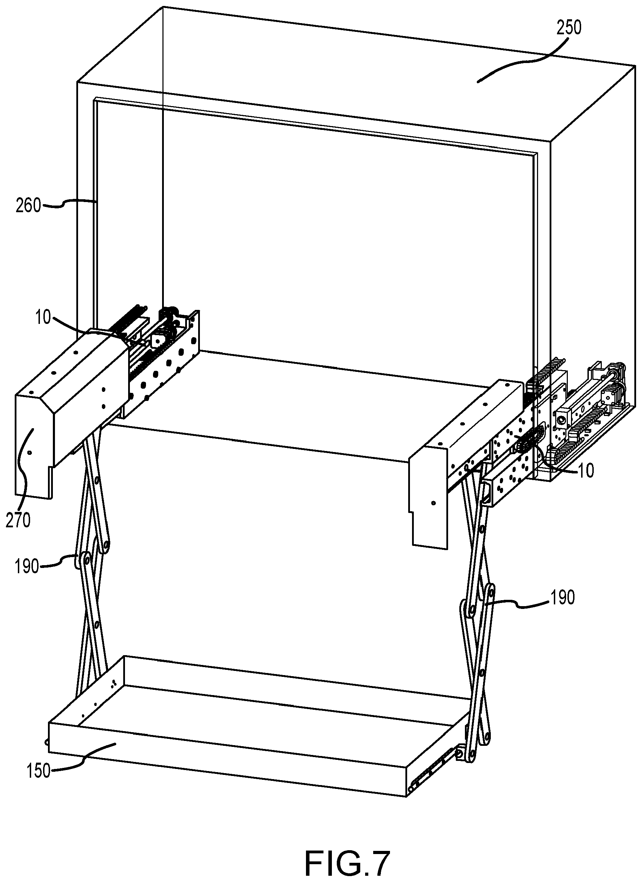

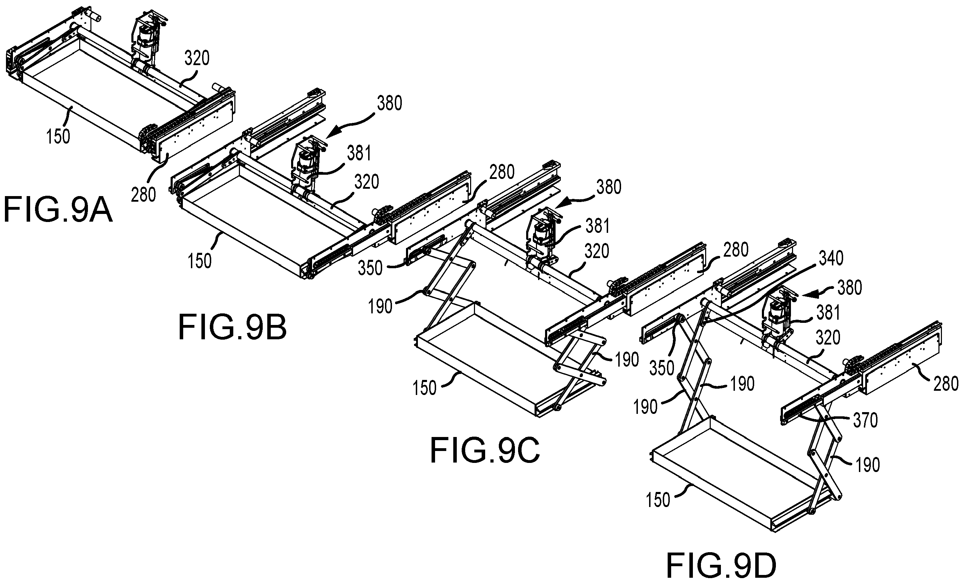

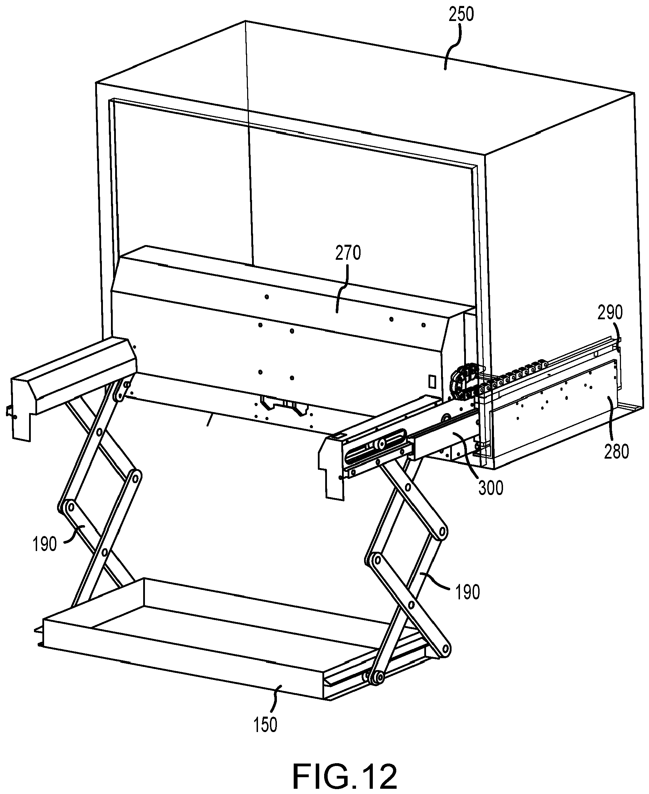

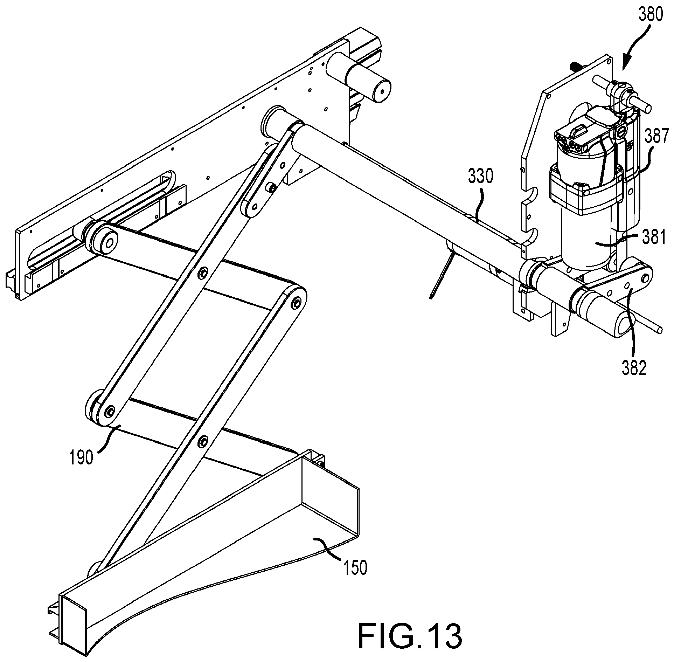

The cargo lowering slide assembly generally comprises two drawer slide assemblies **10**, two scissor arm assemblies **190**, and a cargo platform **150**, as seen in **Figs. 1-15****.** The cargo lowering slide assembly is adapted to be mounted within an enclosure **250**, but may also be mounted to a surface that is not enclosed such as on the top of a vehicle or in the bed of a pickup truck.

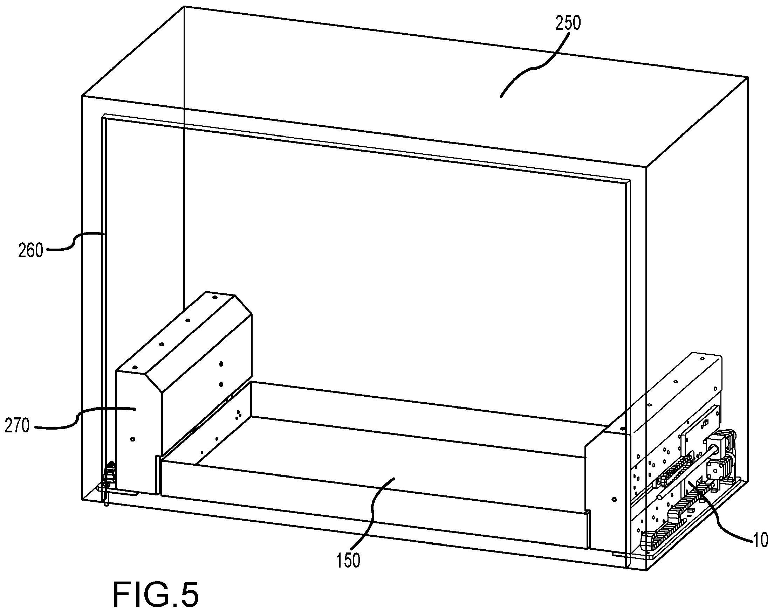

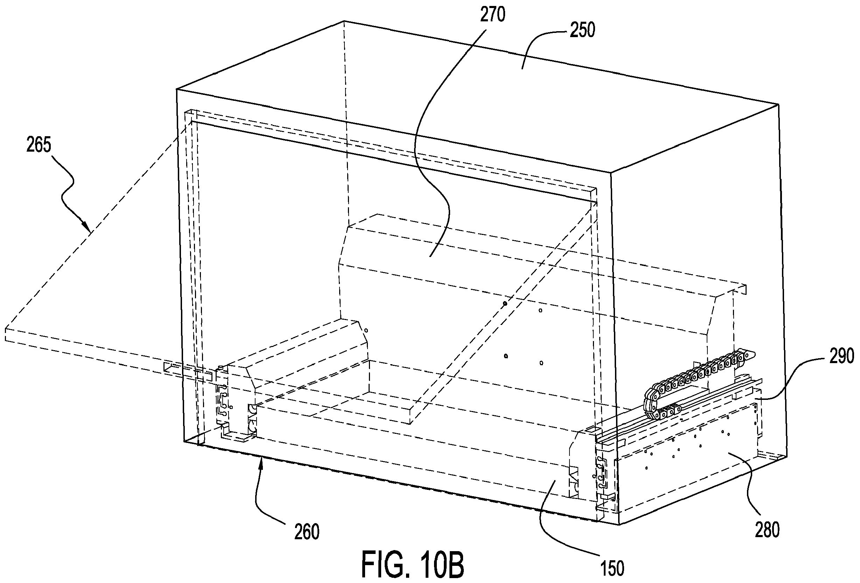

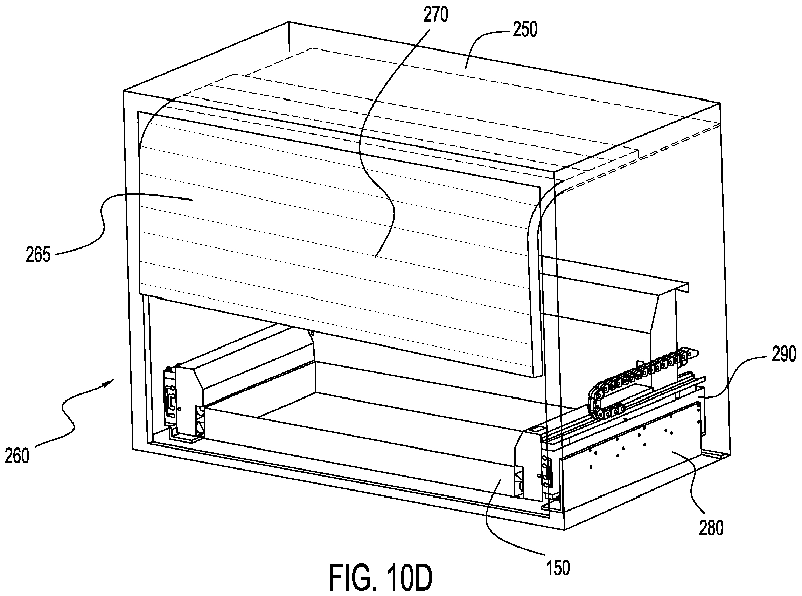

As seen in **Figs. 5-7** and **10-12**, the enclosure **250** may be any enclosure suitable for storing cargo, but generally includes three side walls, a top, a bottom, and a door opening **260**. The door opening of certain embodiments include a door **265** such as a tip up door (**Fig. 10B** **-** **Fig. 10C**), a sliding door, or a roll up door (**Fig. 10D**). The enclosure may be attached or integrated into the body or chassis of a vehicle (not shown) such as a firetruck or emergency response vehicle.

In certain embodiments the cargo lowering slide assembly, the slide assembly **10**, as shown in **Figs. 1-7**, is generally comprised of elements **20** through **140.** Lower slide plate **30** includes a foot **35** for mounting the slide assembly to the bottom of the enclosure **250** or to another surface. The lower slide plate **30** is slideably engaged with lower slide sleeve **40.** In certain embodiments, the slideable engagement comprises ball bearings. Lower slide sleeve **40** is interconnected to upper slide sleeve **50** by bridge **60.** Upper slide sleeve **50** is slideably engaged with upper slide plate **20.** In certain embodiments, the slideable engagement comprises ball bearings. Lower rack gear **110** is interconnected to the top edge of lower slide plate **30**, and upper rack gear **100** is interconnected to the bottom edge of upper slide plate **20.** The slide assembly **10** of certain embodiments includes additional slide plates, slide sleeves, and bridges to increase the overall extended length of the slide assembly.

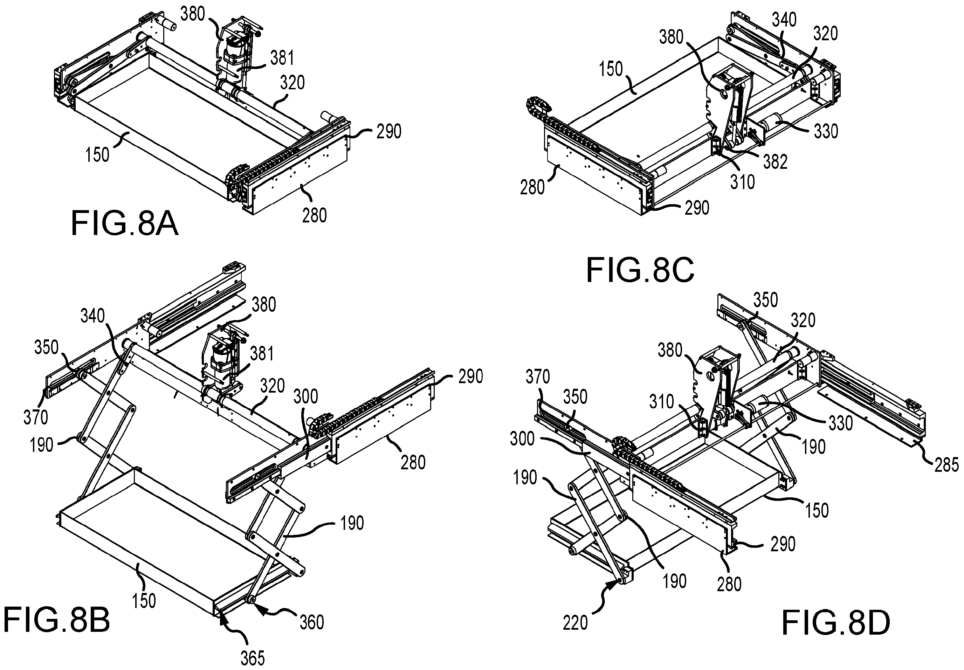

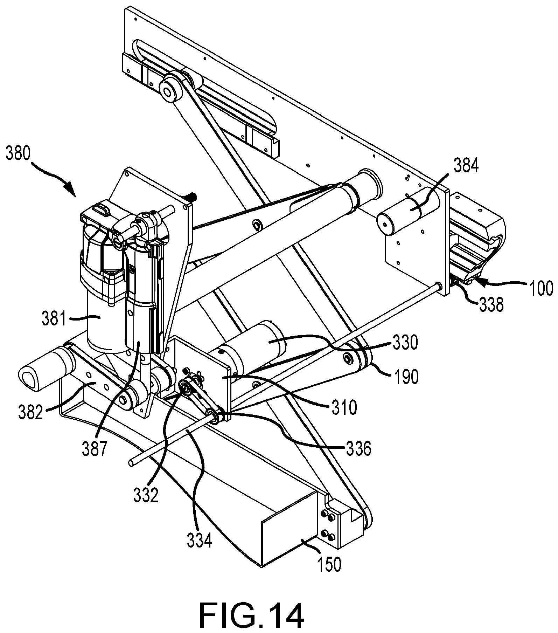

Other embodiments of the slide assembly are shown in **Figs. 8-15****.** The slide assembly includes an outer slide rail **280**, a middle slide rail **290**, and an inner slide rail **300** in a nested configuration. In certain embodiments, the outer slide rail **280** and middle slide rail **290** are slideably engaged by ball bearings, and the middle slide rail **290** and inner slide rail are slideably engaged by ball bearings. Outer slide rail **280** is interconnected to a foot **285** for mounting the slide assembly to the bottom of the enclosure **250** or to another surface. A spur gear **338** (seen in **Fig. 14**) is interconnected to the bottom edge of outer slide rail. In certain embodiments, inner slide rail **300** is interconnected to a slide plate similar to the upper slide plate **20** (**Fig. 1**). The slide plates of opposing slide assemblies may be interconnected by a beam for increased structural rigidity. The slide assembly of certain embodiments includes additional slide rails to increase the overall extended length of the slide assembly.

In certain embodiments, seen in **Figs. 1-7**, slide assembly **10** is extended or contracted horizontally to move the cargo platform **150** by use of extension motor assembly **130**, extension timing belt assembly **140**, and extension screw **120.** The motor assembly **130** is rotatively interconnected with the extension screw **120**, by the extension timing belt assembly **140.** Activation of extension motor assembly **130** causes rotation of extension screw **120** that, in turn, converts rotation through a threaded bushing into linear thrust which is applied to the bridge **60**, the upper slide sleeve **50**, and the lower slide sleeve **40**. The motion of the lower slide sleeve **40** is coupled directly to the motion of the lower spur gear **70**, wherein linear motion of the lower slide sleeve **40** results in linear motion of the lower spur gear **70.** The lower spur gear **70** is rotatively engaged with the lower rack gear **110**, wherein linear motion of the lower spur gear **70** in relation to the lower rack gear **110**, results in the rotation of the lower spur gear **70.** Rotation of lower spur gear **70** against the fixed lower rack gear **110** causes lower slide sleeve **40** to extend or contract relative to lower slide plate **30.** In turn, the lower spur gear **70** which is interconnected to upper spur gear **80** by synchronizer chain **90.** Rotation of the lower spur gear **70** therefore causes rotation of upper spur gear against upper rack gear **100** and causes upper slide plate **20** to extend or contract relative to upper slide sleeve **50.** The synchronizer chain **90** causes relatively simultaneous rotation of lower spur gear **70** and upper spur gear **80** and therefore the extension and contraction of the upper and lower portions of slide assembly **10** is synchronized and amplified. In certain embodiments, the slide assembly **10** can be extended or contracted by use of a drive belt/pulley or drive chain/sprocket assembly, interconnected by mechanical fasteners, welding or by use of adhesive to the rails. Embodiments of the present invention achieve horizontal actuation by utilizing a ball screw/actuator or gearbox assembly or by an air assist type actuator that is interconnected to the slide rails and that extends and returns the slide assembly **10** to an extended or contracted position. In certain embodiments, the cargo lowering slide assembly may also include latches, pins, magnets, solenoids, springs, or other known interference devices for mechanically preventing movement of the cargo lowering slide assembly when in stored, extended, or lowered positions, as well as proximity sensors to electronically monitor and prevent movement of the cargo lowering slide assembly when in stored, extended, or lowered positions.

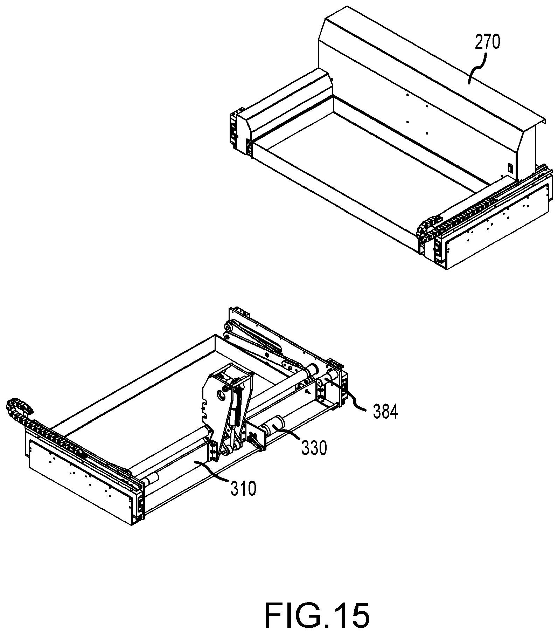

In other embodiments, seen in **Figs. 14** and **15**, the slide assembly is extended or contracted horizontally to move the cargo platform by use of rack drive assembly. The rack drive assembly includes a motor **330** and pulley **332** and is interconnected to a pulley on a rack drive rod **334** by a belt or chain **336.** Activation of the rack drive assembly motor **384** causes rotation of the rack drive rod **334** which, in turn, rotates a spur gear **338** that is engaged with the rack gear **100** interconnected to the bottom edge of upper slide plate **20.** Rotation of spur gear against the fixed rack gear causes the middle and inner slide rails to extend or contract relative to outer slide rail. The slide assembly could also be extended or contracted by use of a drive belt/pulley, drive chain/sprocket, or hydraulic piston assembly, interconnected by mechanical fasteners, welding or by use of adhesive to the rails.

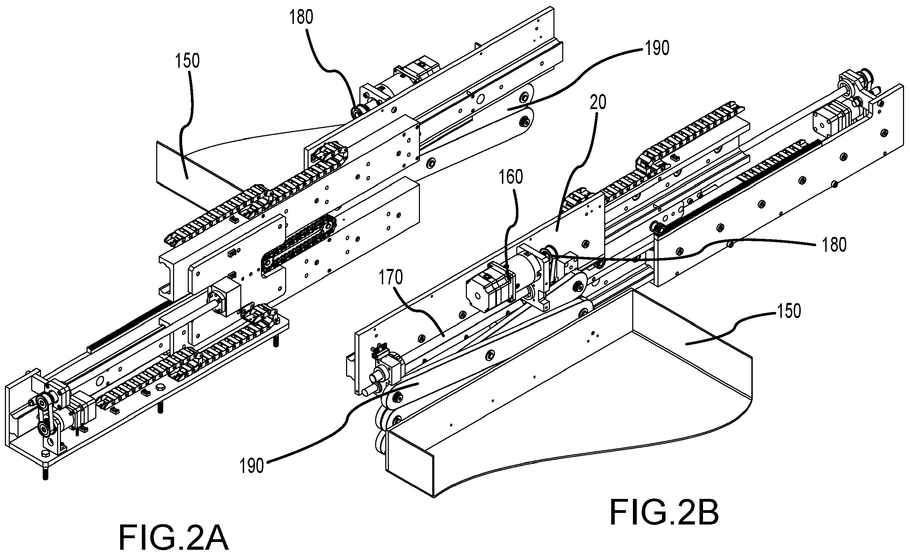

In certain embodiments, as seen in **Figs. 2-4**, the lower ends of scissor arm assemblies **190** are interconnected to opposite sides of the cargo platform **150** by lower scissor pivot **220** and lower pillow block assembly **210.** Cargo platform guide **240** is interconnected to the cargo platform **150** and lower pillow block assembly **210** is slideably engaged to cargo platform guide **240.** The upper ends of scissor arm assemblies **190** are interconnected to respective slide assemblies **10** at upper scissor pivot **230** and upper bushing assembly **200.** Certain embodiments comprise upper bushing assembly **200** threadably interconnected to scissor screw **170.** The cargo platform **150** is extended or contracted vertically by use of scissor motor assembly **160**, scissor timing belt assembly **180**, and scissor screw **170.** Scissor timing belt assembly **180** transfers rotation of scissor motor assembly **160** to scissor screw **170.** In turn, rotation of scissor screw **170** causes upper bushing assembly **200** to travel outward or inward depending upon the direction of rotation of scissor screw **170.** Movement of upper bushing assembly **200** relative to upper scissor pivot **230** causes the scissor arm assembly **190** to extend or contract in a scissor motion. Extension or contraction of the scissor arm assembly **190** may also be achieved with a series of cables and pulleys, screws, or by hydraulic actuation. The cargo platform **150** may also be raised or lowered using telescopic actuation. In other embodiments, cargo platform **150** may be raised or lowered using rods, telescoping mechanisms, hydraulic pistons, treaded rods with nuts, a plurality of screws and bushings or hydraulic cylinders or any combination of mechanisms to raise and lower a platform. As seen in **Figs. 5**, **6**, **10**, **11**, **12**, and **15**, the scissor arm and slide assemblies can be covered by a shroud **270**, in certain embodiments when in a retracted position.

In certain embodiments, seen in **Figs. 8A - 9D** the lower ends of scissor arm assemblies **190** are interconnected to opposite sides of the cargo platform **150** by a lower scissor pivot **220** and a lower roller **360.** The roller is slideably engaged with a channel **365** attached to the cargo platform **150.** The upper ends of scissor arm assemblies **190** are interconnected to respective slide assemblies at a scissor shaft **320** and an upper roller **350.** The upper roller **350** is slideably engaged with a channel **370** integrated into the slide plate. The first end of a lever arm **382** is affixed to the scissor shaft **320** near the middle of the scissor shaft length. As seen in **Figs. 8**, **9**, **13**, and **14** a scissor actuator assembly **380** including a hydraulic piston **381** is interconnected to the scissor shaft **320.** The arm of the piston **387** is rotatably interconnected to the second end of the lever arm **382.** The extension or retraction of the piston arm **387** acts upon the second end of the lever arm, resulting in the rotation of the lever arm **382** about the first end of the lever arm, thus causing the scissor shaft **320** to rotate. In turn, rotation of the scissor shaft **320** causes the scissor arm assembly **190** to extend or contract in a scissor motion and thereby lower or raise the cargo platform **150.** A solenoid locking mechanism **384**, shown in **Fig. 14**, can be used to keep the sliding mechanism and the extending arms in a desired position.

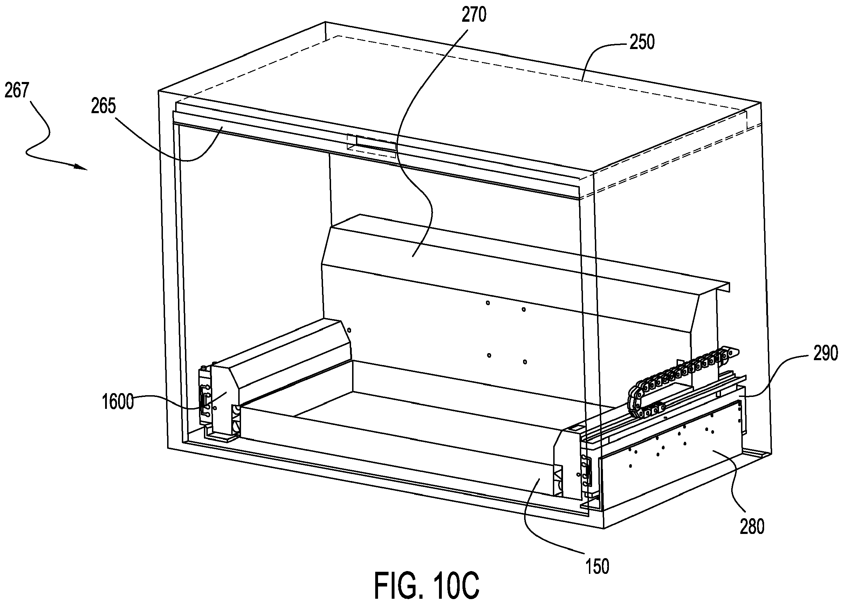

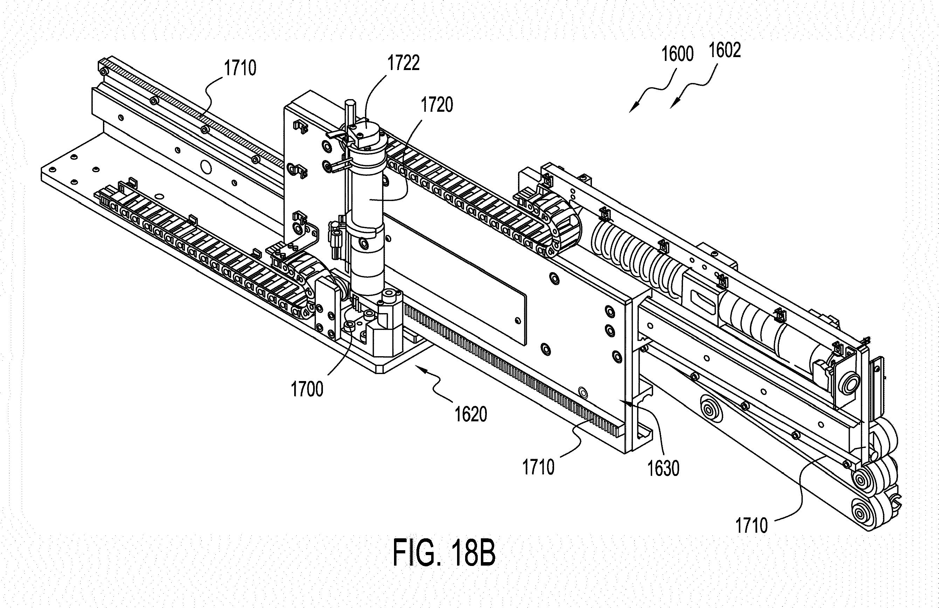

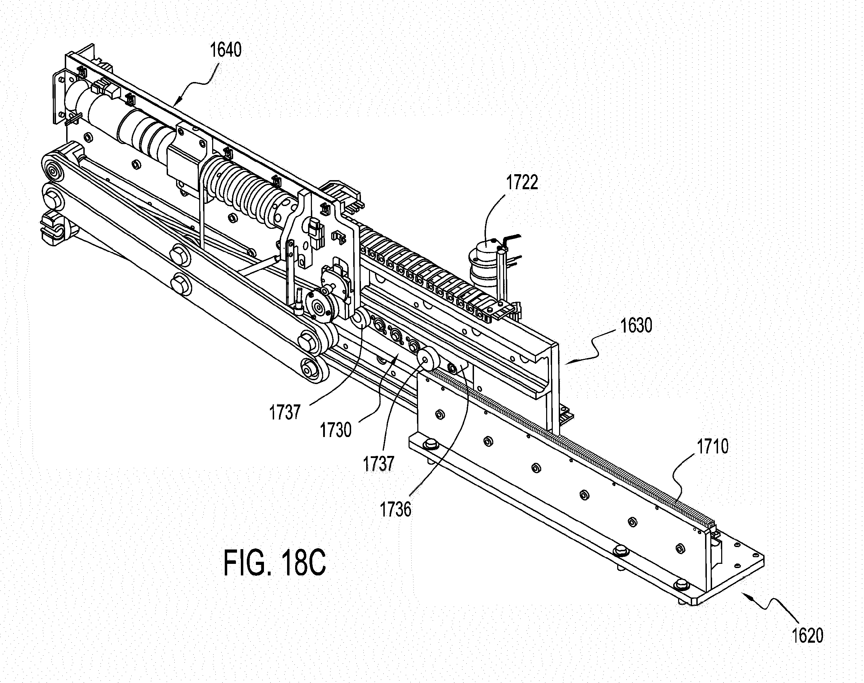

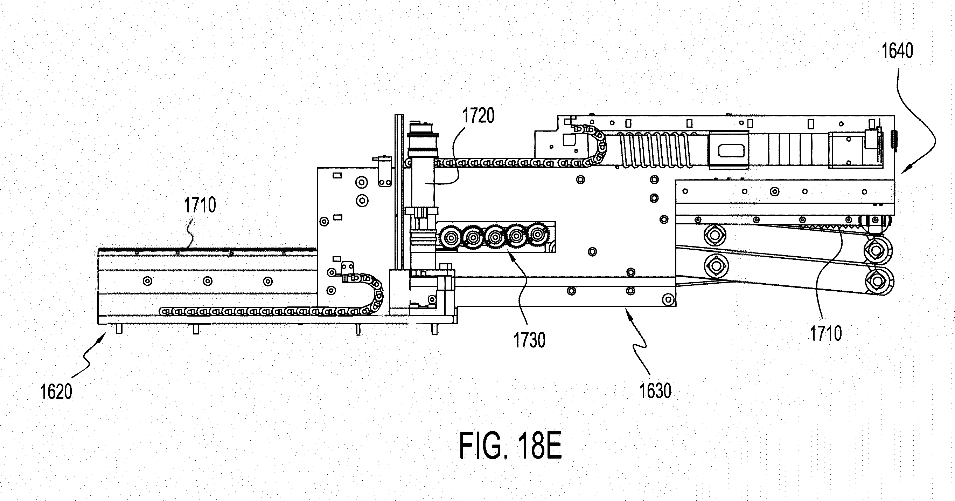

In certain embodiments, the adjustment of one or more elements are facilitated or enabled by electromechanical or other motion-augmented means known to those skilled in the art. Control of the electric, electric hydraulic or air actuator devices in the present invention may be achieved via numerous methods including mechanical actuated electrical switches mounted directly to the cargo lowering slide assembly or via wireless switching mechanisms including smart phone actuation or integration into vehicle multiplexing networks. These control systems may include mechanical, electro-mechanical, or module to control the sequence of extension, lowering, raising, and retraction of the cargo lowering slide assembly. For example, the control system may include sensors - including, but not limited to: encoders, proximity switches, and modules - that prohibit the cargo lowering slide assembly from: (1) extending horizontally unless the door **265** of the enclosure is in a fully opened position (**Fig. 10C**); (2) lowering the cargo platform unless the slide assemblies are in a fully extended position (**Fig. 18B**); or (3) retracting horizontally unless the scissor arms are in a fully retracted or raised position (**Fig. 18B**). The cargo lowering slide assembly may also include sensors or a module to warn if the weight of the load in the cargo platform exceeds design parameters. The cargo lowering slide assembly may also include motor overload protection for sensing such events as jamming of the horizontal or vertical movement of the assembly. The cargo lowering slide assembly may also include audio and/or visual indicators to indicate or warn the user that the slide assembly will be moving or is moving. In certain embodiments, the electromechanical or other motion-augmented means are interconnected and/or in communication with a controller that controls the positioning or movement of the cargo lowering slide assembly.

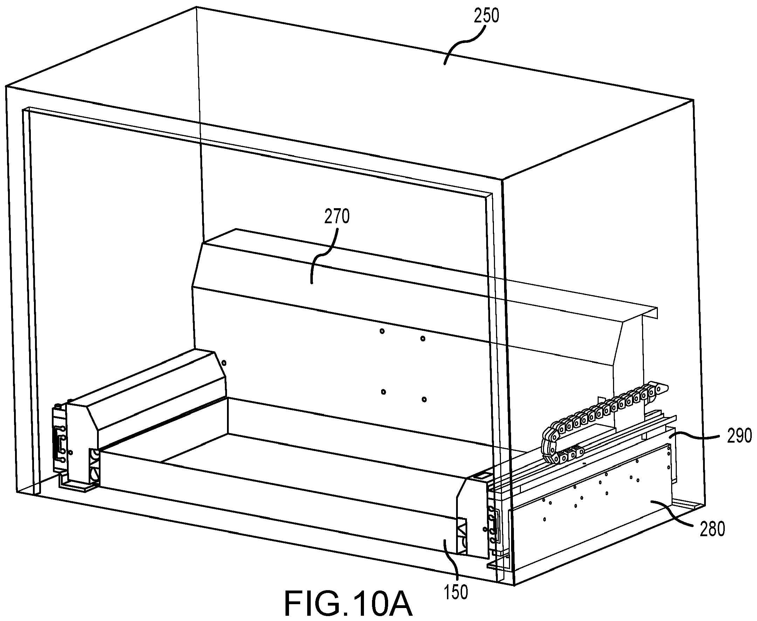

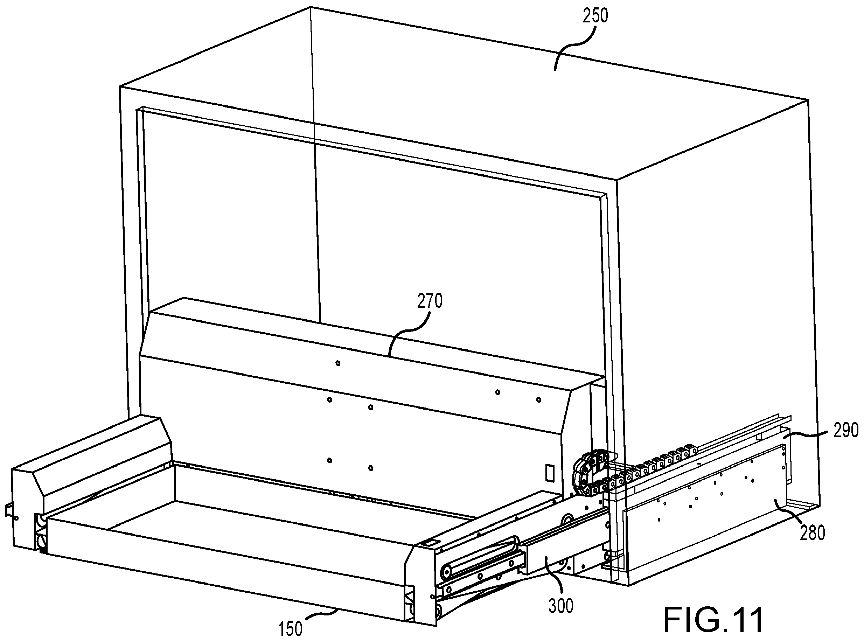

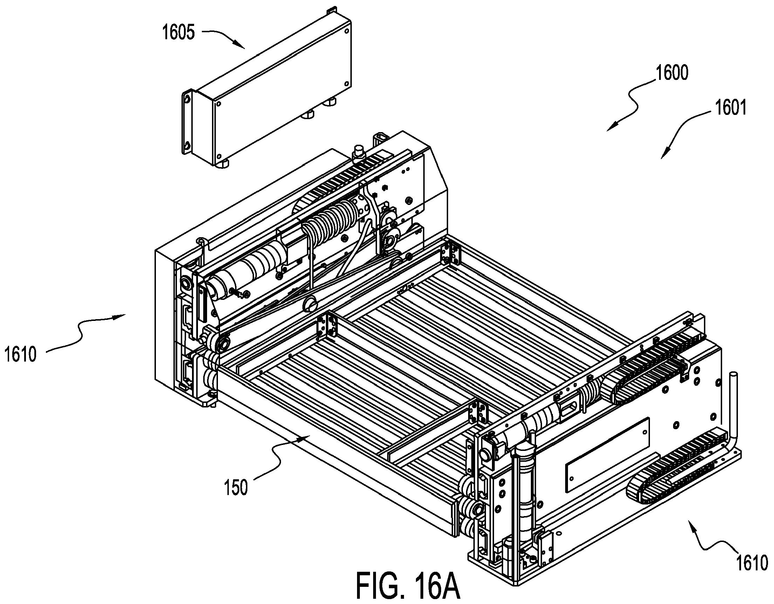

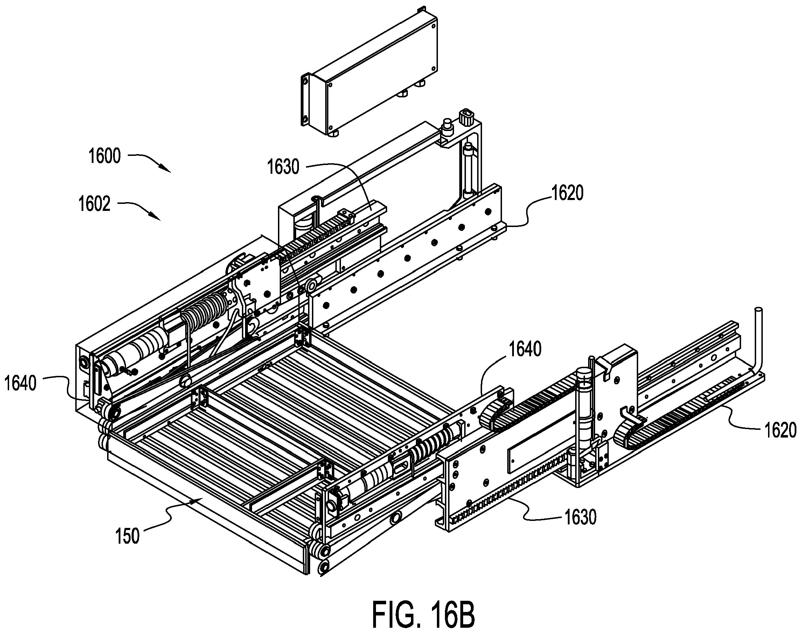

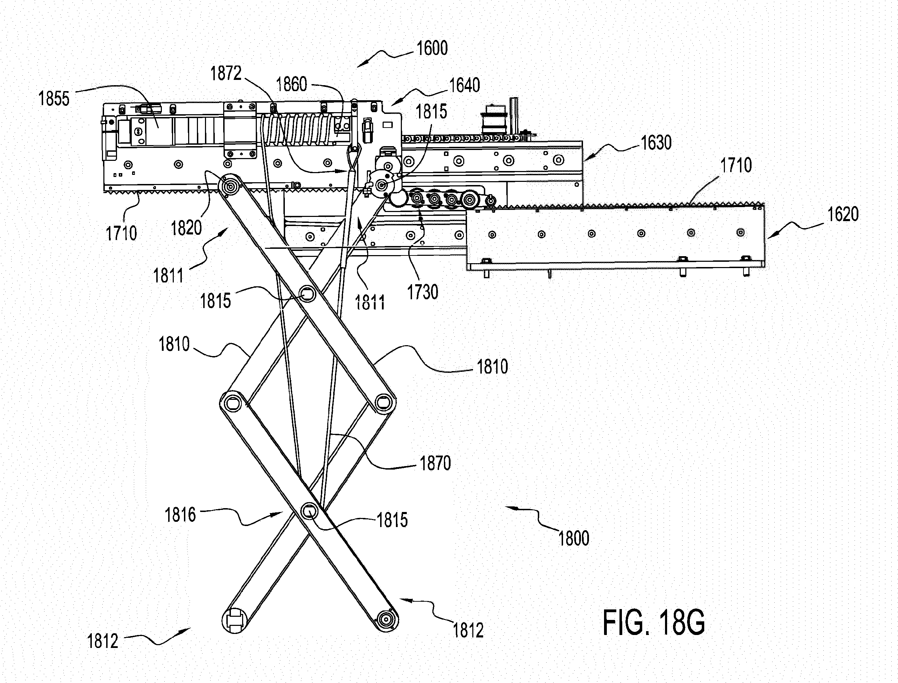

In certain embodiments a cargo lowering slide assembly, shown in **Fig. 18G**, comprises sensors and encoders which detect the position of a door **265 (****Fig. 10B** **-** **Fig. 10D****),** the position of a slide assembly **1600**, and the position of a scissor lift assembly **1800.** The sensors and encoders communicate status with the controller **1605 (****Fig. 16A****)** which restricts the actuation of certain elements without particular prerequisite conditions being met. For instance, as shown in **Fig. 10B** **-** **Fig. 10C**, a slide assembly **1600** is not permitted to extend (shown in **Fig.** 11) unless the door **265** is in a fully open configuration **267.** It will be appreciated that encoders, proximity switches, or modules which communicate with the controller **1605** to determine the configuration or position of various elements of the invention as described herein may be used interchangeably while in keeping with the spirit and scope of the present invention.

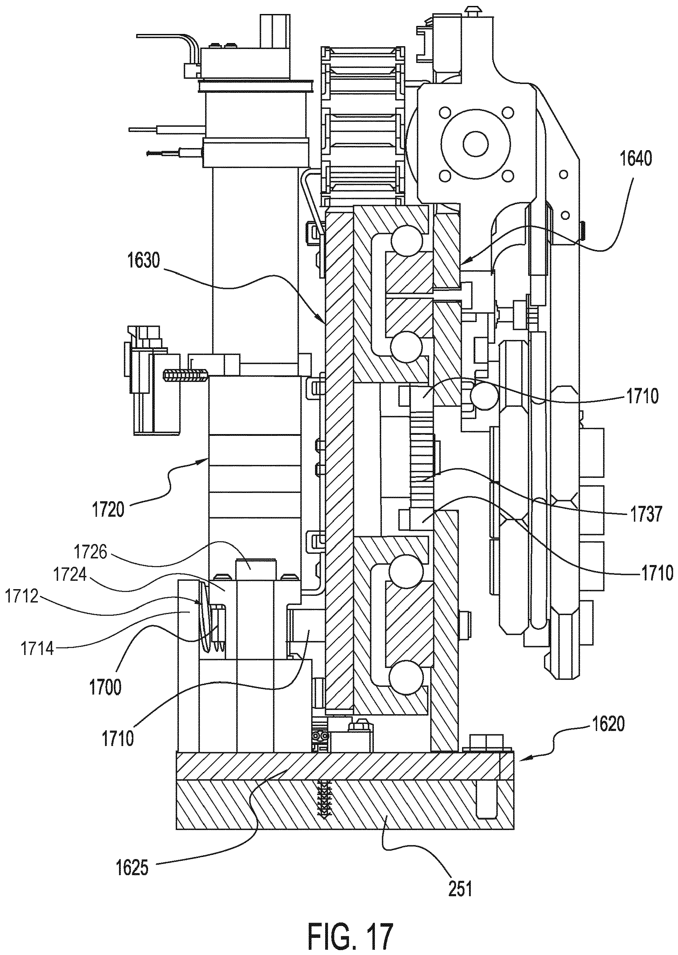

In certain embodiments, seen in **Fig. 16A** **-** **Fig. 16C**, a cargo lowering slide assembly **1600** comprises a first slide assembly **1610** and a second slide assembly **1610.** Each slide assembly **1610** comprises a first slide rail **1620**, a second slide rail **1630**, and a third slide rail **1640** - the slide rails being slidably interconnected to each other. In certain embodiments, as demonstrated in **Fig. 17**, the first slide rail **1620** and the third slide **1640** rail are co-planar, and the second slide rail **1630** is offset from the first slide rail **1620** and the third slide rail **1640.** In certain embodiments (**Fig. 16A** **-** **Fig. 17**), a foot **1625** of the first slide rail is affixed to a structure **251.** In certain embodiments, the slide assembly **1610** is configured such that when the second slide rail **1630** slidably extends or retracts longitudinally in relation to the first slide rail **1620**, the third slide rail **1640** respectively extends or retracts longitudinally from the second slide rail **1630** and first slide rail **1620.**

In certain embodiments, a first slide rail **1620**, second slide rail **1630**, and third slide rail **1640** are slidably interconnected wherein the relative longitudinal movement of any slide rail translates to the respective longitudinal movement of the second slide rail **1630** and third slide rail **1640** toward or away from the first slide rail **1620** in concert.

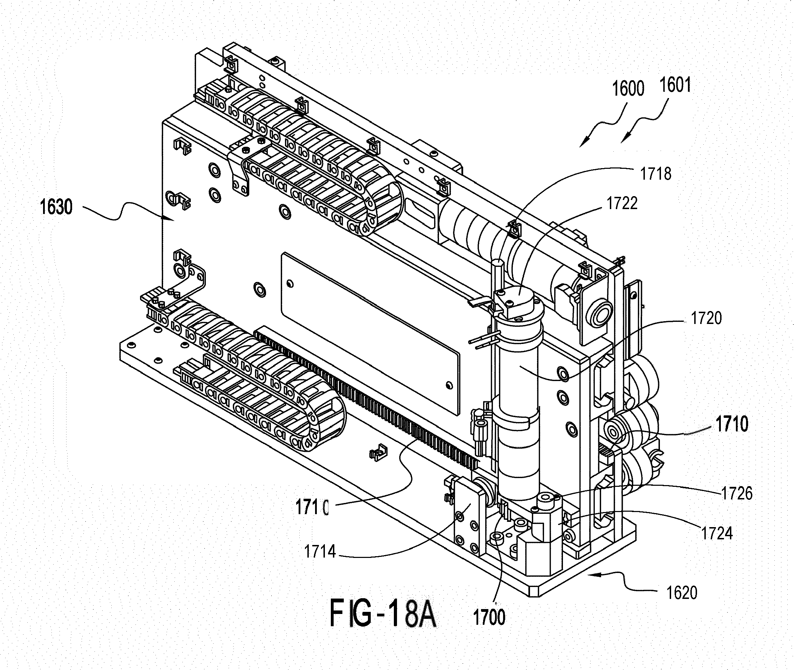

In certain embodiments, seen in **Fig. 18A** **-** **Fig. 18D**, the first slide rail **1620** comprises a spur gear **1700** intermeshed with a rack gear **1710** interconnected with the second slide rail **1630**, wherein the rotation of the spur gear **1700** of the first slide rail results in the longitudinal displacement of the second slide **1630** rail in relation to the first slide rail **1620.** In certain embodiments the spur gear **1700** of the first slide rail is driven by a horizontal drive motor **1720.** In certain embodiments the horizontal drive motor **1720** further comprises an encoder **1722** which measures rotation, and senses when the slide assembly 1600 is in a fully stowed configuration **1601**, fully extended configuration **1602**, and configurations therebetween.

In certain embodiments, shown in **Fig. 17** **-** **Fig. 18G** the first slide rail **1620** comprises a rack gear **1710**, the third slide rail **1640** comprises a rack gear **1710**, and the second slide rail **1630** comprises a spur gear assembly **1730** which intermeshes with the rack gears **1710** of the first slide rail **1620** and third slide rail **1640.** It will be appreciated that although multiple embodiments discussed herein disclose a spur gear, a spur gear may be replaced with a pinion gear of varying tooth configurations including, but not limited to, a helical gear, a double helical gear, or any type of gear configured to mesh with the rack gear **1710.** The spur gear assembly **1730** is configured to simultaneously intermesh with the rack gear **1710** of the first slide rail and the rack gear **1710** of the third slide rail thereby resulting in the first slide rail **1620**, the second slide rail **1630**, and the third slide rail **1640** move in concert. The spur gear assembly **1730** of certain embodiments is intermeshed with the rack gear **1710** of the second slide rail and the rack gear **1710** of the third slide rail simultaneously, wherein the longitudinal movement of the second slide **1630** rail relative to the first slide rail **1620** results in rotation of the spur gear assembly **1730**, thus imparting rotational input from the spur gear assembly **1730** to the rack gear **1710** of the third slide rail, thereby translating to longitudinal movement of the third slide rail **1640** relative to the second slide rail **1630** in substantially the same direction as the longitudinal movement of second slide rail **1630.**

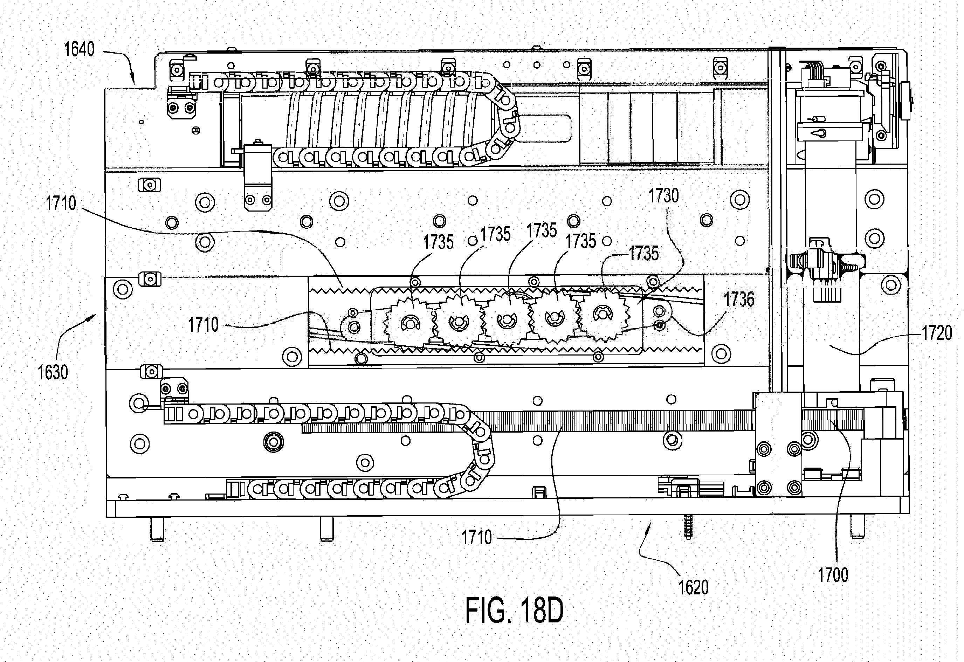

In certain embodiments, seen in **Fig. 18D** **-** **Fig. 18G**, a spur gear assembly **1730** comprises five spur gears **1735** intermeshed in a substantially linear configuration, each spur gear **1735** is axially interconnected to a spur gear assembly structure **1736** wherein the spur gear assembly structure is interconnected to the second slide rail **1630.** The first distal spur gear **1735** and second distal spur gear **1735** of the spur gear assembly are axially interconnected to a first spur drive gear **1737** and a second spur drive gear **1737** respectively, wherein the spur drive gears **1737** are offset from the distal spur gears **1735.** The rotation of the first spur drive gear **1737** results in the direct rotation of the first distal spur gear **1735.** The rotation of the first distal spur gear **1735** results in the actuation of the spur gear assembly **1730**, which results in the rotation of the second distal spur gear **1735**, thus translating to the rotation of the second spur drive gear. A bottom aspect of the first spur drive gear **1737** engages with the rack gear **1710** of the first sliding rail, and the top of the second spur drive gear **1737** engages with the rack gear **1710** of the third sliding rail. Thus, the longitudinal movement of the second slide rail **1630** or the third slide rail **1640** in relation to the first slide rail **1620**, results in the second slide rail **1630** and third slide rail **1640** sliding in the same longitudinal direction in relation to the first slide rail **1620.** It will be appreciated that certain configurations of the spur gear assembly **1730**, an odd number of spur gears **1735** will result in similar translation of individual slide rail movements to the movement of all slide rails in concert, and are in keeping with the spirit and the scope of the present invention.

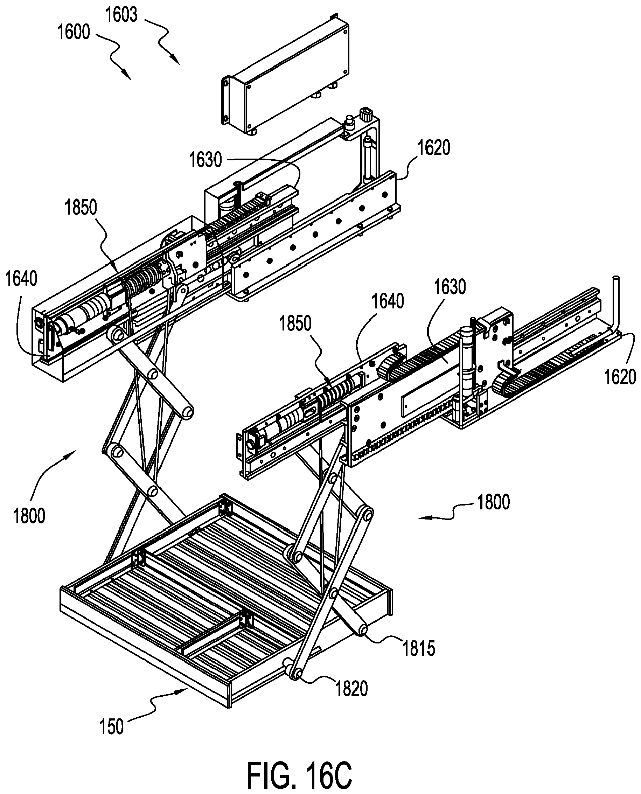

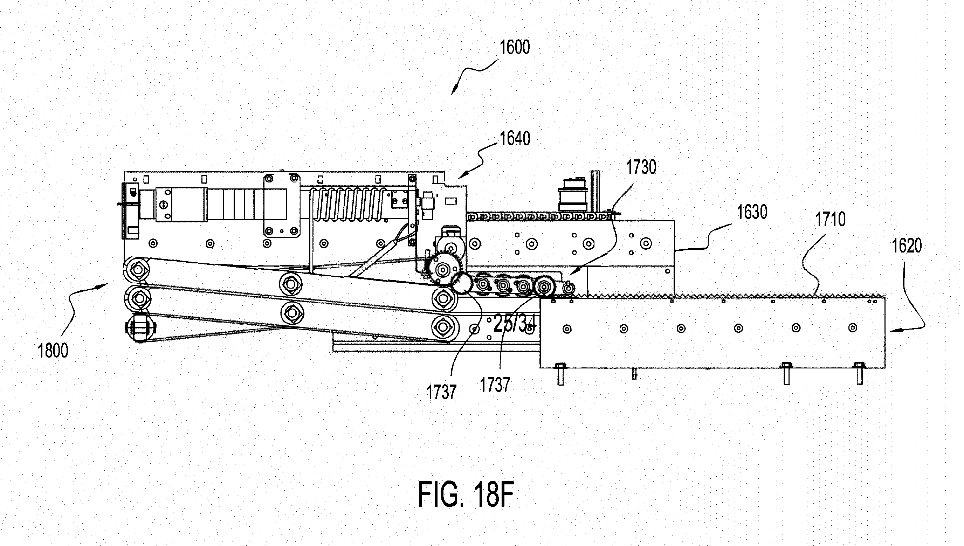

In certain embodiments, shown in **Fig. 16A** **-** **Fig. 16C** and **Fig. 18F** **-** **Fig. 18G**, a slide assembly **1600** comprises a scissor lift assembly **1800** wherein the scissor lift assembly **1800** interconnects the slide assembly **1600** with a cargo platform **150** and allows the vertical raising and lowering of the cargo platform **150** in relation to the slide assembly **1600.** The scissor lift assembly **1800** of certain embodiments comprises a scissors mechanism further comprising a scissor linkage having a first scissor arm **1810** and a second scissor arm **1810** which are pivotally interconnected at a pivoting connection **1815.** The separation of the first ends **1811** of the scissor linkage from each other results in the separation of the second ends **1812** of the scissor linkage from each other, and resultantly the first ends **1811** of the scissor linkage are drawn toward the second ends **1812** of the scissor linkage - resulting in a lifting action from the scissors mechanism and the scissor lift assembly. Conversely, drawing the first ends **1811** of the scissor linkage toward each other results in the drawing together of the second ends **1812** of the scissor linkage, and resultantly the first ends **1811** of the scissor linkage are separated from the second ends **1812** of the scissor linkage - resulting in a lowering action from the scissors mechanism and the scissor lift assembly. In certain embodiments first ends **1811** of the scissor arms comprise one pivoting connection **1815** and one sliding connection **1820** with the third slide rail **1640**, and the second ends **1812** of the scissor arms comprise one pivoting connection **1815** and one sliding connection **1820 (****Figs. 16C** **and** **18G****)** with the cargo platform **150.** It will be appreciated that within certain embodiments of a scissor lift assembly having a scissors mechanism are shown and discussed herein, a scissors mechanism comprising one or more interconnected scissor linkages is in keeping with the spirit and scope of the present invention. It will be further appreciated that although embodiments are shown comprising a scissor lift assembly interconnected with a third slide rail, alternative embodiments comprising a scissor lift assembly interconnected with a slide rail other than the third slide rail as shown, is within the spirit and scope of the present invention.

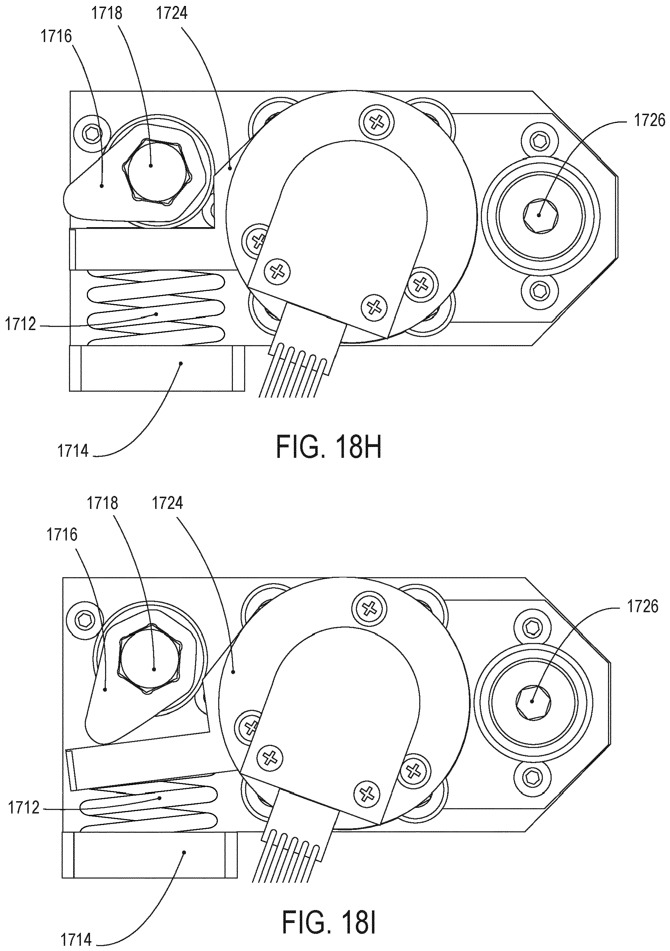

In certain embodiments, shown in **Fig. 17****,** **18A**, **18H** and **18I**, the slide assembly is adapted to allow manual movement of the slide assembly. For example, in the event of a power loss, the horizontal drive motor **1720** can inhibit rotation of spur gear **1700** along rack gear **1710** and prevent manual movement of the slide assembly. This would prevent the manual return of the cargo assembly into the enclosure. To overcome this issue, in certain embodiments as shown in **Fig. 17****,** **18A**, and **18H**, the spur gear **1700** is adapted to disengage from rack gear **1710.** Horizontal drive motor **1720** is mounted to horizontal motor mount **1724** which is, in turn, rotatably interconnected to the first slide rail **1620** by bearing mount **1726.** Bias spring **1712** is configured between bias spring mount **1714** and horizontal motor mount **1724** to bias spur gear **1700** towards and engage with rack gear **1710.** To disengage spur gear **1700** from rack gear **1710**, the user may rotate release cam shaft **1718** using a 12mm socket wrench which rotates release cam **1716** against horizontal motor mount **1724** and, in turn, causes horizontal motor mount **1724** to rotate about bearing mount **1726** and move spur gear **1700** away and disengage from rack gear **1710** as shown in **Fig. 18I****.**

Certain embodiments, shown in **Fig. 18G** **-** **Fig. 19**, comprise a cable lift assembly **1850** wherein a cable **1870** is interconnected with a scissor lift assembly **1800** wherein a portion or the majority of the weight of a load carried by the scissor lift assembly **1800** is borne by the cable lift assembly **1850.** The cable **1870** may be any suitably strong and flexible material such as a steel wire rope, a synthetic or natural fiber rope, or a braided cord.

In certain embodiments, the cable lift assembly **1850** comprises a motor **1855** which is interconnected with a drum **1860** or cylinder. The drum is oriented with a longitudinal axis **1861** substantially perpendicular to the direction of travel **1862** of the scissor lift assembly **1800** for the lifting and lowering of the cargo platform **150.** The cable **1870**, interconnected to and wrapped around the drum **1860**, is extended or retracted through the rotation of the drum **1860** by the motor **1850** in a clockwise or counter-clockwise direction. Thus, the cable **1870** being interconnected with the scissor lift assembly **1800**, raises and lowers the scissor lift assembly **1800** and the cargo platform **150.** In certain embodiments the cable **1870** is interconnected to a pivoting connection **1815** where the first scissor arm **1810** and second scissor arm **1810** are pivotally interconnected. It will be appreciated a scissor arm comprising a plurality of interconnected members, as shown in **Fig. 16C** and **Fig. 18G** are within the spirit and scope of the present invention.

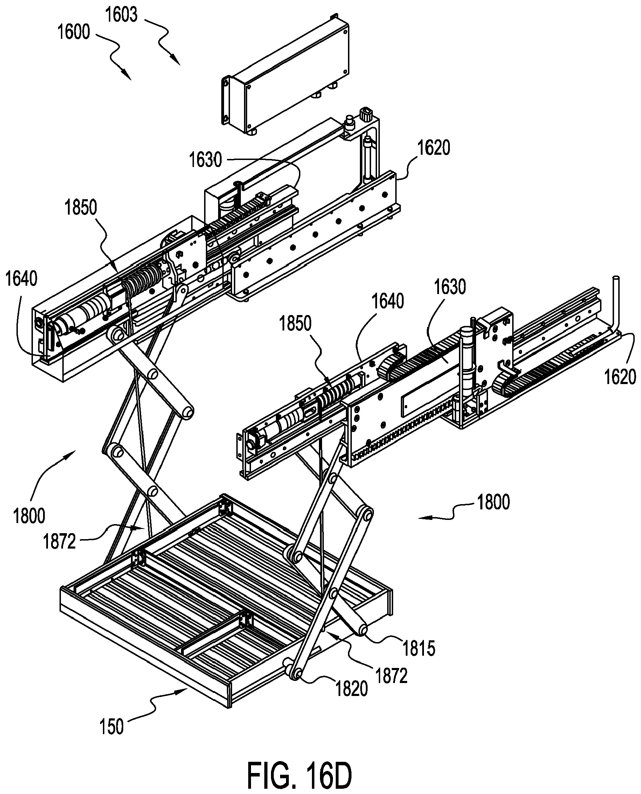

In certain embodiments comprising a cable lift assembly, shown in **Fig. 18G** **-** **Fig. 19**, a first end **1871** of the cable is interconnected to a drum **1860**, the drum **1860** is rotatively interconnected with a slide rail **1640**, the second end **1872** of the cable **1870** is interconnected to the slide rail **1640**, and an intermediate aspect of the cable **1870** located therebetween is configured to interface with a pivoting connection **1815** of the scissor lift assembly. Such embodiments create a mechanical advantage for the lifting of the scissor lift assembly **1800** and the cargo platform **150.** In certain embodiments, the pivoting connection **1815** which the cable **1870** is interconnected with, further comprises a bearing **1816** or other rotational friction reducing device such as a brass bushing or polymeric bushing. The intermediate aspect of the cable interfaces with the bearing to further reduce the force required to lift the scissor lift assembly **1800.** In certain other embodiments, as shown in **Fig. 16D**, second end **1872** of the cable **1870** is interconnected to the cargo platform **150.** The cable **1870**, interconnected to and wrapped around the drum **1860**, is extended or retracted through the rotation of the drum **1860** by the motor **1850** in a clockwise or counter-clockwise direction. Thus, the second end **1872** of the cable **1870** being interconnected with the cargo platform **150**, raises and lowers the scissor lift assembly **1800** and the cargo platform **150.**

In certain embodiments, shown in **Fig. 16C**, a first scissor lift assembly **1800** carries a first side of the cargo platform **150**, and a second scissor lift assembly **1800** carries a second side of the cargo platform **150.** A first cable lift assembly **1850** raises and lowers the first scissor lift assembly **1800** and a second cable lift **1850** assembly raises and lowers the second scissor lift assembly **1800**.

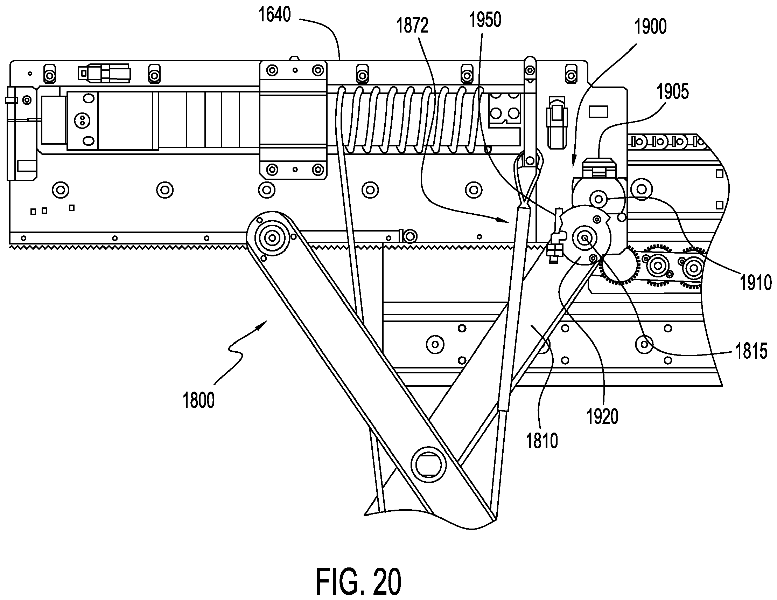

Certain embodiments, as shown in **Fig. 20**, include a rotary encoder assembly **1900** - comprising a rotary encoder **1905**, a first gear **1910**, and a second gear **1920** - is interconnected to a slide rail **1640** and a first scissor arm **1810** in order to determine the position of the first scissor arm **1810** - and thus the scissor arm assembly **1800** - between a fully raised and fully lowered configuration. In certain embodiments, the rotary encoder **1905** is interconnected with the third slide rail **1640**, and the first gear **1910** is interconnected to the rotary encoder **1905** wherein the rotation of the first gear **1910** results in the rotation of the rotary encoder **1905.** The second gear **1920** is interconnected to a pivoting connection **1815** of the first arm **1810** of a scissor lifting assembly and intermeshed with the first gear **1910.** As the scissor lifting assembly **1800** is raised or lowered, the second gear **1920** rotates in concert with the first arm **1810** of the scissor lifting assembly, thereby rotating the first gear **1910**, and the rotary encoder **1905.** In certain embodiments a first rotary encoder assembly is interconnected with a first scissor lift assembly, and a second rotary encoder assembly is interconnected with a second scissor lift assembly, wherein the rotary encoders are comparatively monitored in order to maintain the cargo platform in a level condition while raising or lowering the scissor lift assemblies.

It will be appreciated that many embodiments presented and shown herein comprise motors to drive spur gears. It will be appreciated that alternative embodiments not employing motors for the driving of spur gears, or using motors to drive alternative spur gears are within the spirit and scope of the present invention. Furthermore, it will be appreciated that motors employed in certain embodiments may comprise encoders which allow the consistent monitoring of position of a slide rails in relation to each other, or the position of a cargo platform in relation to a slide rail while in keeping with the spirit and scope of the present invention.

In certain embodiments, a drive motor employs motor current monitoring method wherein the sudden and/or unexpected change in current conveys an undesirable scenario such as payload overload, equipment falling off the lift, equipment placed on lift mid-operation, impingement of an object within moving aspects of the cargo lowering slide assembly, an obstacle under the cargo lowering slide assembly which prevents the full deployment of the cargo lowering slide assembly away from or to the ground, or impingement within the cargo lowering slide assembly which prevents the full extension or retraction of the cargo lowering slide assembly to or from the vehicle. The sensing of unexpected and/or sudden change in current draw from a motor alerts the system to halt operation of the cargo lowering slide assembly for a predetermined period of time, or until additional user input is provided to reinitiate actuation of motors to deploy or stow the cargo lowering slide assembly.

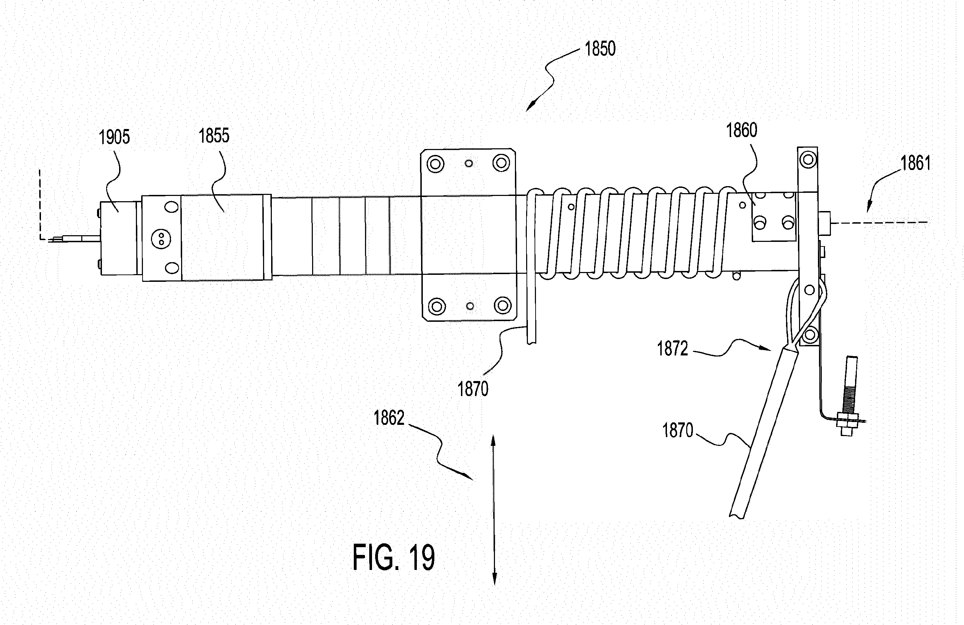

Certain embodiments of a cargo lowering slide assembly, shown in **Fig. 16A** - **Fig. 16C****,** employ sensors in order to determine the configuration in a fully stowed configuration **1601,** fully extended configuration or raised configuration **1602,** a fully deployed or lowered configuration **1603,** and various configurations therebetween. An exemplary sensor **1950** is shown in **Fig. 20****.** Such sensors include, but are not limited to, stop-limit switches, magnetic proximity sensors, and motor encoders. Such sensors allow the sensing of when the cargo lowering slide assembly reaches predetermined configurations such as a fully stowed, fully extended, and fully deployed configurations. Furthermore, such sensors provide and communicate information to the controller **1605 (****Fig. 16A****)** surrounding the status of a motor, which relates to the position of certain aspects of the system. In certain embodiments, a motor encoder incorporated with a motor communicates the radial travel of a motor, which translates to an extension distance of a slide assembly, or the extension distance of a lowering assembly. In other embodiments, an encoder **1905** interconnected to a first motor **1855** of a cable lift assembly (**Fig. 19**) and an encoder interconnected to a second lowering motor, may be compared continuously or periodically in order to ensure the lowering assembly is raised and lowered in a manner to keep a cargo platform **150** level.

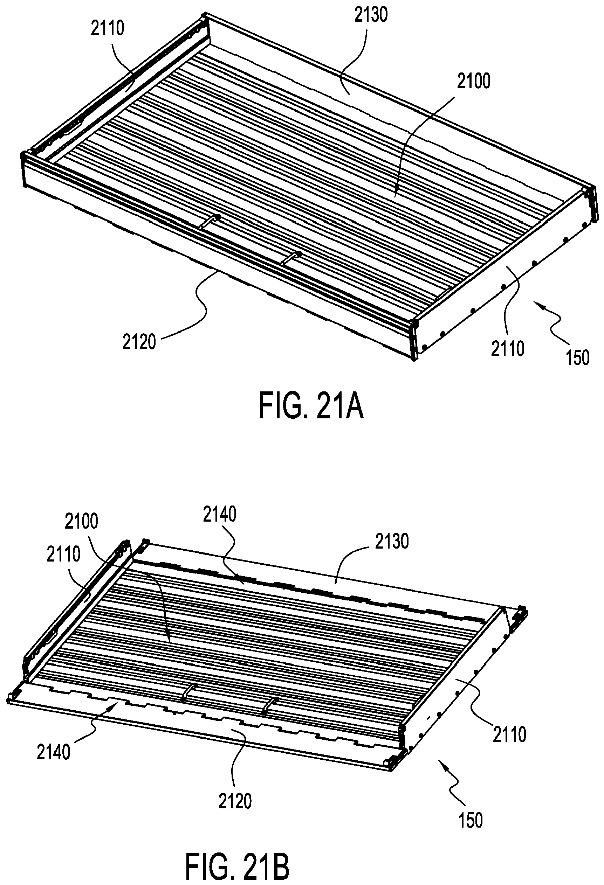

Certain embodiments, as shown in **Figs. 21A** and **21B**, include a cargo platform **150.** The cargo platform comprises a floor **2100**, opposing side walls **2110**, a front wall **2120**, and a back wall **2130.** In certain embodiments, the opposing side walls **2110** are rigidly interconnected to the floor **2100.** In certain embodiments, as shown in **Fig. 21B**, the front wall **2120** and/or the back wall **2130** are interconnected to the floor **2100** by a hinged connection **2140.** The hinged connection **2140** allows the front wall **2120** and/or the back wall **2130** to be lowered so that equipment and the like can be wheeled on or off the cargo platform **150.**

The structural materials employed advantageously in the present invention are fashioned from machined plastics, extruded, machined, or cast aluminum or stainless steel, and although several suitable alternatives are available, as one skilled in the art would recognize readily. Likewise, any padding, where padding is desirable, is preferably some kind of foamed elastomer, though other suitable materials exist. Other hardware, brackets, locking pins and supports may be fashioned from aluminum, stainless steel, brass, or other suitable material. One of ordinary skill in the art will appreciate that embodiments of the present disclosure may be constructed of materials known to provide, or predictably manufactured to provide the various aspects of the present disclosure. These materials may include, for example, stainless steel, titanium alloy, aluminum alloy, chromium alloy, and other metals or metal alloys. These materials may also include, for example, carbon fiber, ABS plastic, polyurethane, and other fiber-encased resinous materials, synthetic materials, polymers, and natural materials. The system and its elements could be flexible, semi-rigid, or rigid and made of materials such as stainless steel, titanium alloy, aluminum alloy, chromium alloy, and other metals or metal alloys, carbon fiber, ABS plastic, polyurethane, and other fiber-encased resinous materials, synthetic materials, polymers, and natural materials. In certain embodiments, some or all components are manufactured by way of 3-D printing.

The exemplary systems and methods of this disclosure have been described in relation to firetrucks and rescue vehicles and associated operations. However, to avoid unnecessarily obscuring the present disclosure, the preceding description omits a number of known structures and devices. This omission is not to be construed as a limitation of the scopes of the claims. Specific details are set forth to provide an understanding of the present disclosure. It should however be appreciated that the present disclosure may be practiced in a variety of ways beyond the specific detail set forth herein.

Although the present disclosure describes components and functions implemented in the aspects, embodiments, and/or configurations with reference to particular standards and protocols, the aspects, embodiments, and/or configurations are not limited to such standards and protocols. Other similar standards and protocols not mentioned herein are in existence and are considered to be included in the present disclosure. Moreover, the standards and protocols mentioned herein and other similar standards and protocols not mentioned herein are periodically superseded by faster or more effective equivalents having essentially the same functions. Such replacement standards and protocols having the same functions are considered equivalents included in the present disclosure.

The present disclosure, in various aspects, embodiments, and/or configurations, includes components, methods, processes, systems and/or apparatus substantially as depicted and described herein, including various aspects, embodiments, configurations embodiments, sub-combinations, and/or subsets thereof. Those of skill in the art will understand how to make and use the disclosed aspects, embodiments, and/or configurations after understanding the present disclosure. The present disclosure, in various aspects, embodiments, and/or configurations, includes providing devices and processes in the absence of items not depicted and/or described herein or in various aspects, embodiments, and/or configurations hereof, including in the absence of such items as may have been used in previous devices or processes, e.g., for improving performance, achieving ease and\or reducing cost of implementation.

The foregoing discussion has been presented for purposes of illustration and description. The foregoing is not intended to limit the disclosure to the form or forms disclosed herein. In the foregoing Description for example, various features of the disclosure are grouped together in one or more aspects, embodiments, and/or configurations for the purpose of streamlining the disclosure. The features of the aspects, embodiments, and/or configurations of the disclosure may be combined in alternate aspects, embodiments, and/or configurations other than those discussed above. This method of disclosure is not to be interpreted as reflecting an intention that the claims require more features than are expressly recited in each claim. Rather, as the following claims reflect, inventive aspects lie in less than all features of a single foregoing disclosed aspect, embodiment, and/or configuration.

Moreover, though the Description has included description of one or more aspects, embodiments, and/or configurations and certain variations and modifications, other variations, combinations, and modifications are within the scope of the disclosure, e.g., as may be within the skill and knowledge of those in the art, after understanding the present disclosure. It is intended to obtain rights which include alternative aspects, embodiments, and/or configurations to the extent permitted, including alternate, interchangeable and/or equivalent structures, functions, ranges or steps to those claimed, whether or not such alternate, interchangeable and/or equivalent structures, functions, ranges or steps are disclosed herein, and without intending to publicly dedicate any patentable subject matter.

While various embodiments of the present invention have been described in detail, it is apparent that modifications and alterations of those embodiments will occur to those skilled in the art. However, it is to be expressly understood that such modifications and alterations are within the scope and spirit of the present invention. Further, the inventions described herein are capable of other embodiments and of being practiced or of being carried out in various ways. In addition, it is to be understood that the phraseology and terminology used herein is for the purposes of description and should not be regarded as limiting. The use of "including," "comprising," or "adding" and variations thereof herein are meant to encompass the items listed thereafter and equivalents thereof, as well as, additional items.

## Claims

1. A cargo lowering slide assembly comprising:
a first slide assembly having at least a first slide rail and a second slide rail, the second slide rail interconnected and substantially parallel to the first slide rail, wherein the second slide rail is configured to slidably extend and retract longitudinally in relation to the first slide rail;
the first slide rail having a spur gear axially interconnected with the first slide rail, and the second slide rail having a rack gear, wherein the spur gear of the first slide rail is intermeshed with the rack gear of the second slide rail, and wherein the rotation of the spur gear in a first direction extends the first slide assembly toward an extended configuration and wherein the rotation of the spur gear in a second direction retracts the first slide assembly toward a retracted configuration;
a first scissor lift assembly comprising a scissors mechanism, the scissors mechanism comprising at least one scissors linkage with a first end comprising a pivoting connection and a sliding connection with the first slide assembly;
the scissors mechanism further comprising a second end having a pivoting connection and a sliding connection with a cargo platform;
a first cable lift assembly interconnected to the first slide assembly, the first cable lift assembly comprising a drum having a longitudinal axis substantially perpendicular to the direction of travel of the scissor lift assembly; and
the first cable lift assembly further comprising a cable interconnected with the drum and interconnected with the scissor lift assembly or the cargo platform, wherein the rotation of the drum in a first direction lowers the cargo platform toward a lowered configuration, and wherein the rotation of the drum in a second direction raises the cargo platform toward a raised configuration.

2. The cargo lowering slide assembly of claim 1, wherein the first slide assembly further comprises a third slide rail interconnected with and substantially parallel to the second slide rail, and wherein the third slide rail is configured to slidably extend and retract longitudinally in relation to the second slide rail.

3. The cargo lowering slide assembly of claim 2, wherein the first scissor lift assembly and the first cable lift assembly are interconnected to the third slide rail.

4. The cargo lowering slide assembly of claim 3, wherein the second slide rail further comprises a spur gear assembly, the spur gear assembly comprising at least a first spur drive gear intermeshed with a rack gear of the first slide rail, and a rack gear of the third slide rail, and wherein the longitudinal extension of the second slide rail in relation of the first slide rail results in the longitudinal extension of the third slide rail in relation to the second slide rail, and wherein the longitudinal retraction of the second slide rail in relation to the first slide rail results in the longitudinal retraction of the third slide rail in relation to the second slide rail.

5. The cargo lowering slide assembly of claim 4, wherein the spur gear assembly comprises a first spur drive gear which is intermeshed with the rack gear of the first slide rail;
a second spur drive gear intermeshed with the rack gear of the third slide rail;
a first distal spur gear axially interconnected with the first spur drive gear;
a second distal spur gear axially interconnected with the second spur drive gear; and
an odd number of spur gears intermeshed between the first distal spur gear and the second distal spur gear;
wherein the rotation of the first spur drive gear rotates the first distal spur gear, rotates the odd number of spur gears, rotates the second distal spur gear, and thereby rotates the second spur drive gear.

6. The cargo lowering slide assembly of claim 5 wherein the odd number of spur gears comprises three or five spur gears.

7. The cargo lowering slide assembly of claim 5, wherein the cable further comprises a first end interconnected to the drum, a second end interconnected to the third slide rail, and an intermediate aspect therebetween configured to interface with the scissor mechanism.

8. The cargo lowering device of claim 7, wherein the scissors linkage comprises a first scissor arm and a second scissor arm interconnected at a pivoting connecting between the first scissor arm and the second scissor arm; and
the pivoting connection of first scissor arm and the second scissor arm comprising a bearing, wherein the intermediate aspect of the cable interfaces with the bearing.

9. The cargo lowering slide assembly of claim 5, wherein the cable further comprises a first end interconnected to the drum, a second end interconnected to the third slide rail, and an intermediate aspect therebetween configured to interface with the cargo platform.

10. The cargo lowering device of claim 9, wherein the pivoting connection with a cargo platform comprises a bearing wherein the intermediate aspect of the cable interfaces with the bearing.

11. The cargo lowering device of claim 1, further comprising:
a rotary encoder assembly interconnected to the first slide assembly and the scissors linkage; and
a controller;
wherein the rotatory encoder assembly communicates position of the cargo platform to the controller.

12. The cargo lowering device of claim 11, wherein the rotary encoder assembly comprises:
a rotary encoder interconnected with the first slide assembly;
a first gear interconnected to the rotary encoder, wherein the rotation of the first gear of the rotary encoder assembly results in the rotation of the rotary encoder;
a second gear interconnected to the pivoting connection of the first end of the scissors linkage, and the second gear of the rotary encoder assembly is intermeshed with the first gear of the rotary encoder assembly, wherein the rotation of the second gear of the rotary encoder assembly results in the rotation of the first gear of the rotary encoder assembly, and
wherein actuation of the scissor linkage to raise or lower the cargo platform results in the rotation of the second gear of the encoder assembly.

13. The cargo lowering device of claim 11, wherein the cargo lowering device is interconnected with an enclosure;
the enclosure comprising a door; and
a first sensor configured to detect a fully open configuration of the door and communication with the controller,
wherein the controller permits the longitudinal extension and retraction of the first slide assembly when the first sensor communicates a fully open configuration of the door, and
wherein the controller restricts the longitudinal extension and retraction of the first slide assembly when the first sensor does not communicate a fully open configuration of the door.

14. The cargo lowering device of claim 1, wherein the cargo lowering device is interconnected with an enclosure;
the enclosure comprising a door; and
a first sensor configured to detect a fully open configuration of the door and communication with the controller,
wherein the controller permits the longitudinal extension and retraction of the first slide assembly when the first sensor communicates a fully open configuration of the door, and
wherein the controller restricts the longitudinal extension and retraction of the first slide assembly when the first sensor does not communicate a fully open configuration of the door.

15. The cargo lowering device of claim 1, further comprising:
a second sensor interconnected with the first slide assembly, the second sensor configured to detect a fully extended configuration of the first slide assembly, and the second sensor in communication with the controller; and
a third sensor interconnected with the first scissor lift assembly, the third sensor configured to detect a fully raised configuration of the first scissor lift assembly, and the third sensor in communication with the controller,
wherein controller permits the raising and lowering of the first scissor lift assembly when the second sensor communicates a fully extended configuration of the first slide assembly,
wherein controller restricts the raising and lowering of the first scissor lift assembly when the second sensor does not communicate a fully extended configuration of the first slide assembly,
wherein the controller permits the longitudinal extension and retraction of the first slide assembly when the third sensor communicates a fully raised configuration of the first scissor lift assembly; and
wherein the controller restricts the longitudinal extension and retraction of the first slide assembly when the third sensor does not communicate a fully raised configuration of the first scissor lift assembly.
